# EUROPEAN PATENT APPLICATION

(11) **EP 4 440 233 A1**
(43) Date of publication of application: **02.10.2024**
(21) Application number: 22898587.5
(22) Date of filing: 22.11.2022
(51) Int. Cl.: H04W 76/15, H04W 16/26, H04W 40/12, H04W 88/04, H04W 92/08

(54) **COMMUNICATION SYSTEM**

(30) Priority: 24.11.2021 JP 2021190185
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2022/043223
(87) International publication number: WO 2023/095804

(57) **Abstract**

A communication system includes: a base station adaptive to a fifth generation radio access system; a plurality of communication terminals connected to the base station; and a device connected to the communication terminals, and a first communication terminal and a second communication terminal among the plurality of communication terminals are connected to the same base station, and in a state in which the device is communicating with a core network via the first communication terminal and the base station, a session for the device to perform communication is established between the second communication terminal and the core network.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

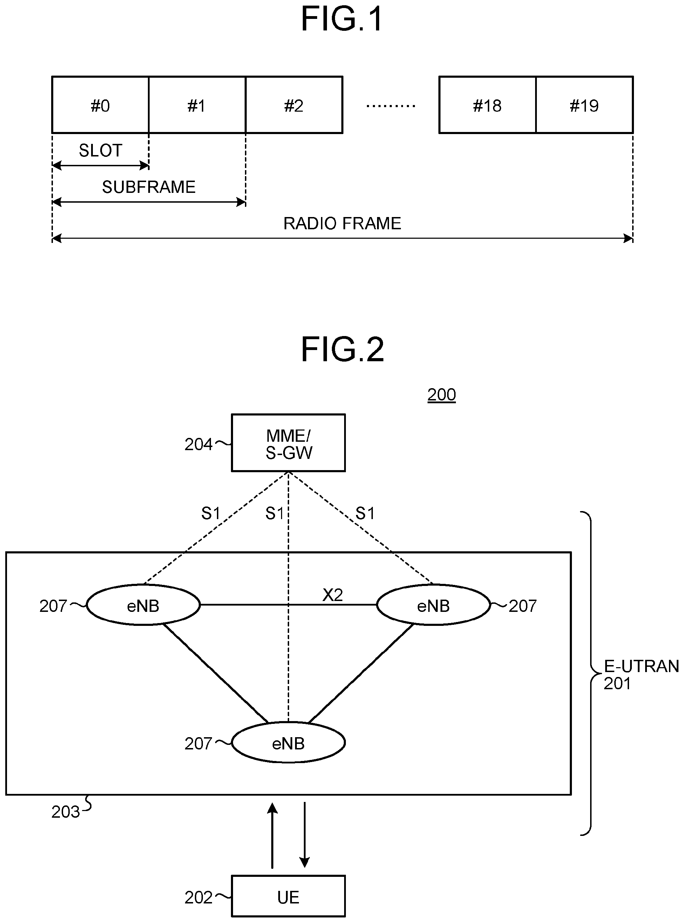

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020.

For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)) .

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). In the SL communication, communication is performed between terminals. Examples of the service using the SL communication include a vehicle-to-everything (V2X) service and a proximity service. In the SL communication, not only direct communication between terminals but also communication between a UE and an NW via a relay has been proposed (see Non Patent Literatures 20, 23, and 26).

Furthermore, in 3GPP, integrated access and backhaul (IAB) has been studied in which both an access link which is a link between a UE and a base station and a backhaul link which is a link between base stations are performed by radio (see Non Patent Literatures 16 and 27).

In addition, it has been proposed in 3GPP that in order to support communication for a wide variety of services, for example, factory devices, construction devices, wearable devices, and the like each perform communication by using a 5G radio access system via a UE (see Non Patent Literature 28).

### Citation List

### Non Patent Literature

Non Patent Literature 1: 3GPP TS 36.300 V16.5.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.5.0
Non Patent Literature 13: 3GPP TS 38.211 V16.5.0
Non Patent Literature 14: 3GPP TS 38.213 V16.5.0
Non Patent Literature 15: 3GPP TS 38.214 V16.5.0
Non Patent Literature 16: 3GPP TS 38.300 V16.5.0
Non Patent Literature 17: 3GPP TS 38.321 V16.4.0
Non Patent Literature 18: 3GPP TS 38.212 V16.5.0
Non Patent Literature 19: 3GPP TS 38.331 V16.4.0
Non Patent Literature 20: 3GPP TR 23.703 V12.0.0
Non Patent Literature 21: 3GPP TS 23.501 V17.0.0
Non Patent Literature 22: 3GPP TS 23.287 V16.5.0
Non Patent Literature 23: 3GPP TS 23.303 V16.0.0
Non Patent Literature 24: 3GPP TS 38.305 V16.4.0
Non Patent Literature 25: 3GPP TS 23.273 V17.0.0
Non Patent Literature 26: 3GPP TR 38.836 V17.0.0
Non Patent Literature 27: 3GPP TS 38.401 V16.5.0
Non Patent Literature 28: 3GPP TS 22.261 V18.4.0
Non Patent Literature 29: 3GPP RP-212013
Non Patent Literature 30: 3GPP RP-211993
Non Patent Literature 31: 3GPP TS 23.502 V17.2.0

### Summary of Invention

### Problem to be solved by the Invention

In a 5G radio access system, communication for a wide variety of services is performed. For example, there is a case where factory devices, construction devices, wearable devices, and the like each perform communication by using the 5G radio access system via a UE. Such communication requires higher reliability and robustness. Communication between a device and an NW is conventionally performed via one UE. However, in a case where a communication situation of communication via one UE deteriorates, the device cannot change the UE to be connected, which may arise a problem such as interruption of communication. Therefore, techniques including a technique which enables each of devices used for a wide variety of services to communicate with an NW by using a plurality of UEs have been proposed (see Non Patent Literatures 29 and 30). However, details of these techniques are not disclosed, and thus there arises a problem that a device cannot perform communication by using a plurality of UEs, and reliability and robustness cannot be improved.

In view of the above problem, an object of the present disclosure is to improve reliability and robustness in a case where devices for a wide variety of services each perform communication by using a 5G radio access system via a UE.

### Means to Solve the Problem

A communication system according to the present disclosure includes: a base station adaptive to a fifth generation radio access system; a plurality of communication terminals connected to the base station; and a device connected to the communication terminals, wherein a first communication terminal and a second communication terminal among the plurality of communication terminals are connected to a same base station, and in a state in which the device is communicating with a core network via the first communication terminal and the base station, a session for the device to perform communication is established between the second communication terminal and the core network.

### Effects of the Invention

The communication system according to the present disclosure can improve reliability and robustness in a case where devices for a wide variety of services each perform communication by using a 5G radio access system via a UE which is a communication terminal.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a conceptual diagram of a configuration using a plurality of UEs for communication between devices and an NW in a first embodiment.
FIG. 15 is a diagram illustrating examples of protocols in a case where PDU sessions are individually established between each UE and a CN in a plurality of UEs used for communication between a device and an NW in the first embodiment.
FIG. 16 is a diagram of a first half of a sequence illustrating an example of a method for changing a path for communication between the device and the NW in the first embodiment.
FIG. 17 is a diagram of a second half of the sequence illustrating the example of the method for changing the path for communication between the device and the NW in the first embodiment.
FIG. 18 is a diagram of a first half of a sequence illustrating an example of a method for changing a path for communication between the device and the NW in a first modification of the first embodiment.
FIG. 19 is a diagram of a second half of the sequence illustrating the example of the method for changing the path for communication between the device and the NW in the first modification of the first embodiment.
FIG. 20 is a diagram of a sequence illustrating an example of a method for changing a path for communication between the device and the NW in a second modification of the first embodiment.
FIG. 21 is a diagram of a sequence illustrating an example of a method for changing a path for communication between the device and the NW in a third modification of the first embodiment.
FIG. 22 is a diagram illustrating examples of protocols in a case where one PDU session is established between one UE and a CN in a plurality of UEs used for communication between a device and an NW in a second embodiment.
FIG. 23 is a diagram of a first half of a sequence illustrating an example of a method for changing a path for communication between the device and the NW in the second embodiment.
FIG. 24 is a diagram of a second half of the sequence illustrating the example of the method for changing the path for communication between the device and the NW in the second embodiment.
FIG. 25 is a diagram of a first half of a sequence illustrating another example of the method for changing the path for communication between the device and the NW in the second embodiment.
FIG. 26 is a diagram of a second half of the sequence illustrating the another example of the method for changing the path for communication between the device and the NW in the second embodiment.
FIG. 27 is a conceptual diagram of a configuration using a plurality of UEs for communication between a device and an NW in a third embodiment.
FIG. 28 is a diagram illustrating examples of protocols in a case where communication between one UE and a gNB is split by using another UE in one PDU session in a plurality of UEs used for communication between the device and the NW in the third embodiment.
FIG. 29 is a diagram of a first half of a sequence illustrating an example of a method for changing a path for communication between the device and the NW in the third embodiment.
FIG. 30 is a diagram of a second half of the sequence illustrating the example of the method for changing the path for communication between the device and the NW in the third embodiment.

### Description of Embodiments

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

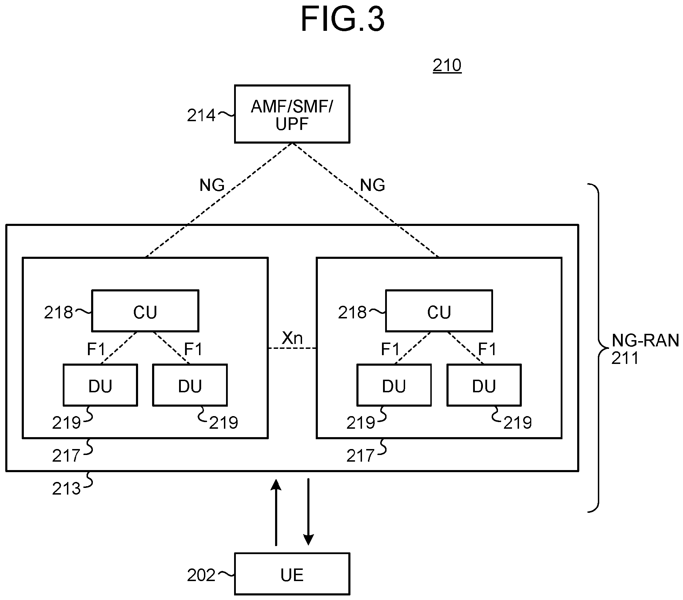

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-R_AN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

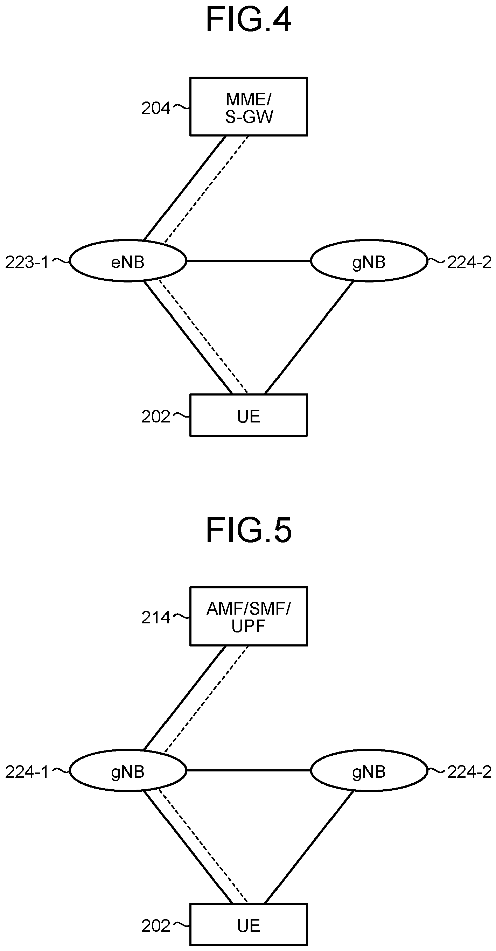

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

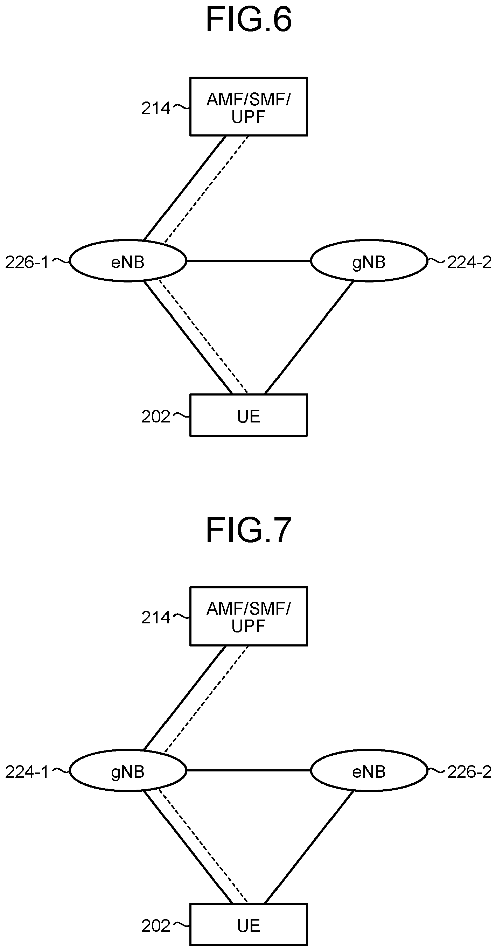

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

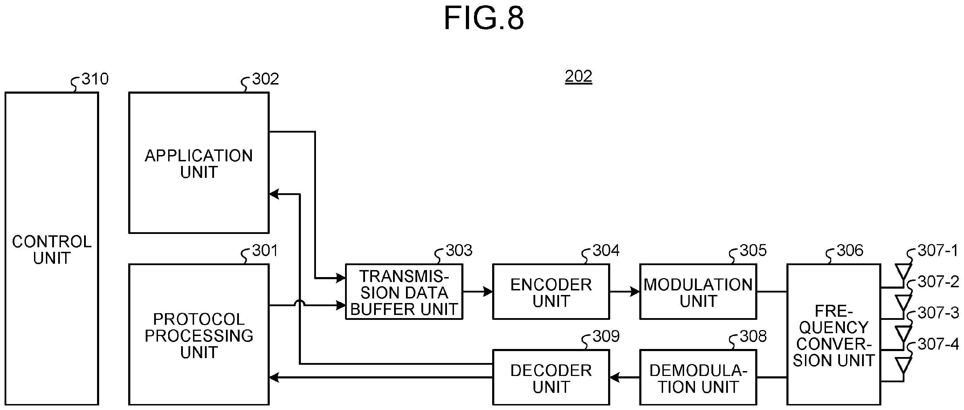

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

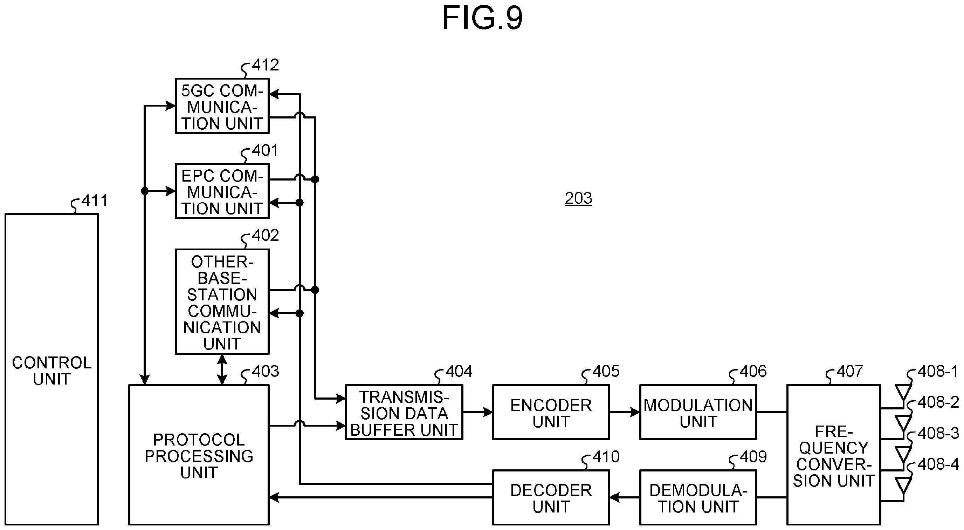

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

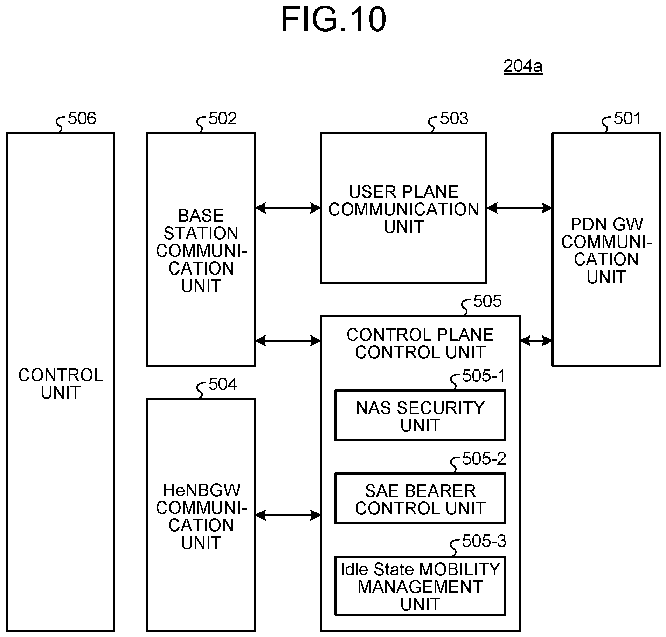

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

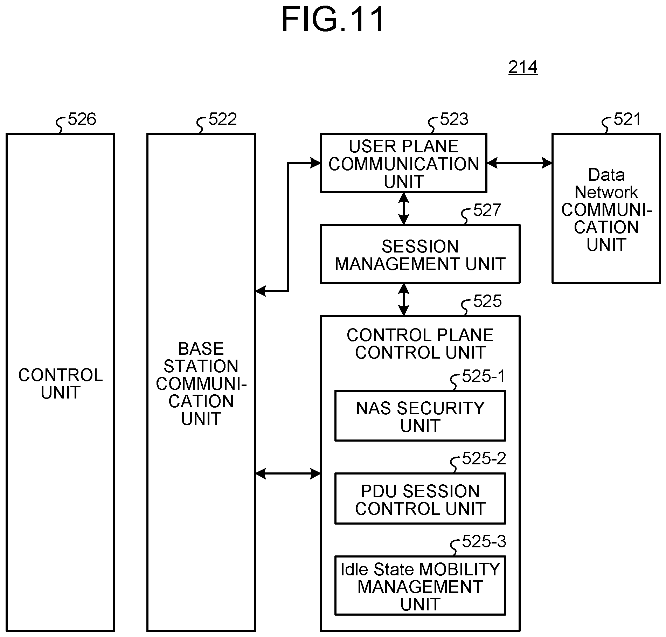

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

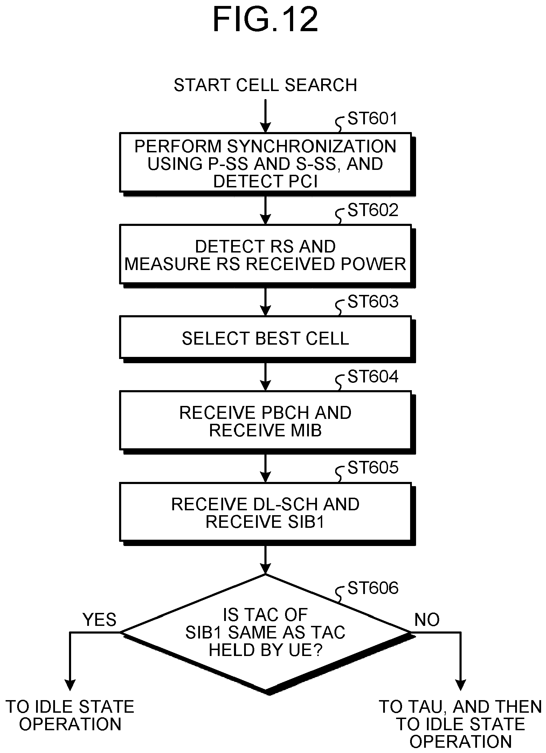

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

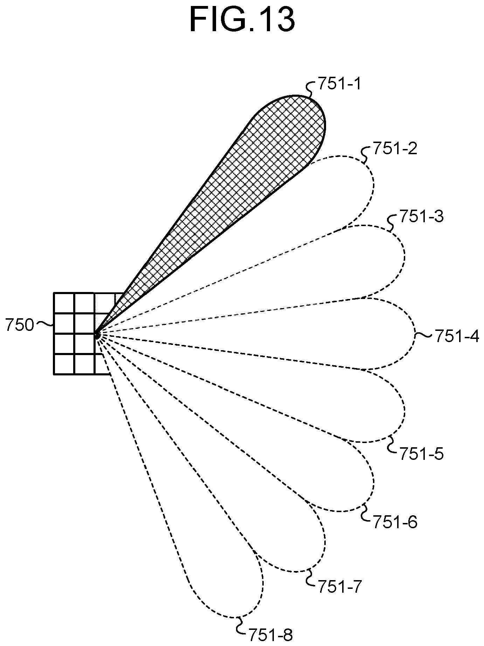

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also realized by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In a 5G radio access system, communication for a wide variety of services is performed. For example, there is a case where factory devices, construction devices, wearable devices, and the like each perform communication by using the 5G radio access system via a UE. Such communication requires higher reliability and robustness. Communication between a device and an NW of a 5G radio access system is conventionally performed via one UE. However, in a case where a communication situation of communication via one UE deteriorates, the device cannot change the UE to be connected, which may arise a problem such as interruption of communication. Therefore, techniques including a technique which enables each of devices used for a wide variety of services to communicate with an NW by using a plurality of UEs have been proposed (see Non Patent Literatures 29 and 30).

For example, there have been proposed techniques including a technique which enables a device to perform communication via a different UE in a case where a communication situation between the device and the NW deteriorates. However, details of these techniques are not disclosed at all, and thus there is a problem that a device cannot perform communication by using a plurality of UEs.

The first embodiment discloses a method for solving such a problem.

In order to solve the above problem, the communication system according to the first embodiment uses a plurality of UEs for communication between a device and an NW. It is preferable to individually establish PDU sessions between each UE and a CN in the plurality of UEs used for communication between the device and the NW. The CN may be a UPF.

Communication may be performed between the device and the NW via one UE among the plurality of UEs, and communication may not be performed between the device and the NW via another UE.

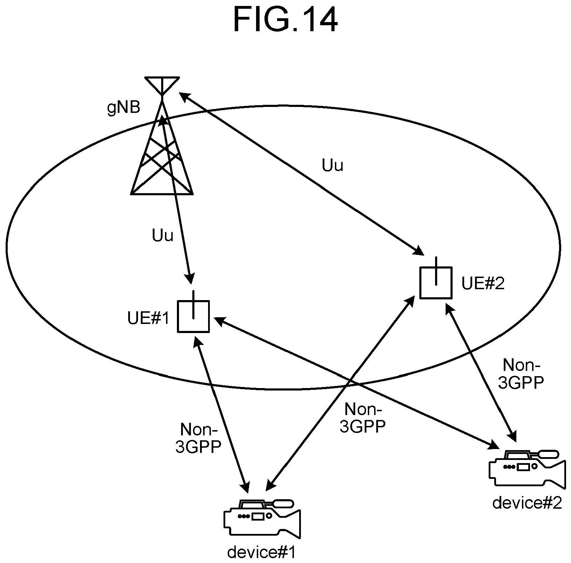

FIG. 14 is a conceptual diagram of a configuration using a plurality of UEs for communication between devices and an NW in the first embodiment. FIG. 14 is a conceptual diagram in which the devices perform communication with the NW by using the plurality of UEs. Device #1 performs communication with the NW by using UE #1 and UE #2. Device #2 performs communication with the NW by using UE #1 and UE #2. UE #1 and UE #2 are connected to the CN via a gNB. In the first embodiment, PDU sessions are individually established between UE #1 and the CN and between UE #2 and the CN, UE #1 and UE #2 being used for communication between device #1 and the NW. For example, communication between the devices and the NW may be performed by using a path between UE #1 among the plurality of UEs and the gNB, and communication between the devices and the NW may not be performed by using a path between UE #2 and the gNB. For example, communication between the devices and the NW may be performed by using the path between UE #2 among the plurality of UEs and the gNB, and communication between the devices and the NW may not be performed by using the path between UE #1 and the gNB.

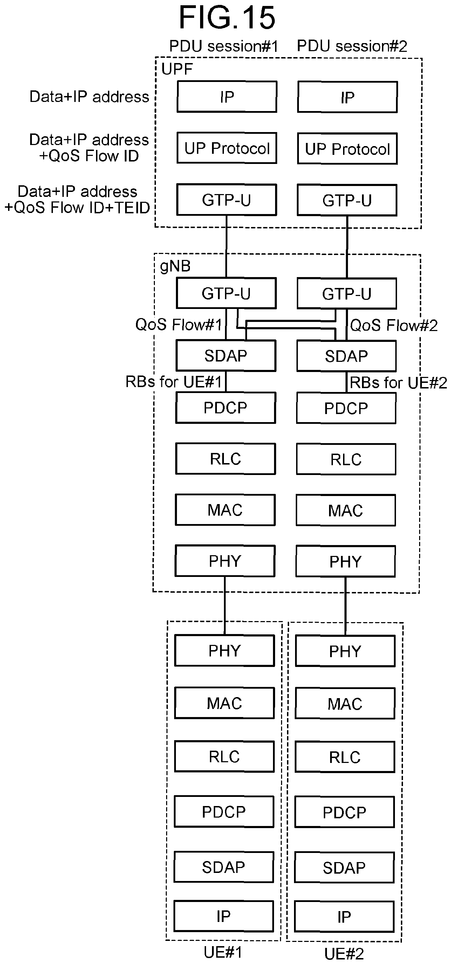

FIG. 15 is a diagram illustrating examples of protocols in a case where PDU sessions are individually established between each UE and a CN in a plurality of UEs used for communication between a device and an NW in the first embodiment. The UPF, the gNB, and the UEs are illustrated. A PDU session (hereinafter sometimes referred to as PDU session #1) is established between UE #1 and the UPF, and a PDU session (hereinafter sometimes referred to as PDU session #2) is established between UE #2 and the UPF. In the UPF, an IP address is added to data in each IP layer, and a QoS flow identifier (QoS flow identity (QFI)) is added in each PDU session user plane protocol (hereinafter sometimes referred to as a UP protocol). The UP protocol may be located in a PDU layer. A GTP-U is configured in the UPF and the gNB for communication between the UPF and the gNB, and a tunnel endpoint identifier (TEID) which is an identifier of a path of the GTP-U is added. The UPF and the gNB identify a UPF and a gNB as destinations of data transmission by using the TEID. In the UPF and the gNB, the IP layer, the UP protocol, and the GTP-U may be configured for each PDU session.

SDAP is configured in the gNB and the UEs. The SDAP may be configured for each PDU session. In the gNB, the SDAP is connected to the GTP-U and identifies, by using the QFI, which QoF of which PDU session the data is from. In the gNB and the UEs, protocols of PDCP, RLC, MAC, and PHY are configured as configurations of radio bearers (RBs) for each PDU session. The RBs may be configured for each QoS flow. The RLC, the MAC, and the PHY are sometimes referred to as RLC bearers. A plurality of RLC bearers may be configured in one RB. Data is transmitted and received between the protocols. Communication is performed between the gNB and the UEs by using the configured RBs.

In the protocols of the UPF and the UEs, a PDU session type may be IP, or may be Ethernet (registered trademark) as another type. A wide variety of services can be supported.

The gNB controls paths between the gNB and the UEs used for communication between the device and the NW. The gNB controls a PDU session used for communication between the device and the NW. The gNB reloads data of GPRS tunneling protocol for user plane (GTP-U) configured between the UPF and the gNB for PDU session #2 established between the CN and UE #2 among a plurality of UEs used for communication between the device and the NW onto data of GTP-U configured between the UPF and the gNB for PDU session #1 established between the CN and UE #1 among the plurality of UEs. The gNB maps data of the GTP-U configured for PDU session #2 to the GTP-U for PDU session #1. A PDU session identifier may be used for the mapping. A tunneling endpoint ID (TEID) of the GTP-U may be used. The QFI may be used.

The mapping may be performed in the GTP-U configured in the gNB. The mapping may be performed between the GTP-U and the SDAP configured in the gNB. As another method, a new protocol may be provided for mapping. For example, a new protocol for mapping may be provided between the GTP-U and the SDAP configured in the gNB. The data of PDU session #2 is preferably mapped to PDU session #1 by the protocol. The gNB preferably inserts the data of PDU session #2 into a QoS flow of PDU session #1.

When mapping the data of PDU session #2 to PDU session #1, the gNB preferably adds the QFI of PDU session #1 to the data of PDU session #2. As another method, the QFI of the data of PDU session #2 may be replaced with the QFI of PDU session #1. Thus, the gNB can insert the data of PDU session #2 into the QoS flow of PDU session #1 by using the QFI of PDU session #1.

Thus, in a plurality of UEs used for communication between the device and the NW, data of a PDU session of a UE not in communication can be mapped to a PDU session of a UE that performs communication. Communication between the device and the NW can be performed by using a path between one UE among the plurality of UEs and the gNB.

The gNB may perform activation/deactivation (which may be turning on/off) of a path for communication between the gNB and each UE. The gNB may perform activation/deactivation (hereinafter referred to as act/deact) of communication between the gNB and the UEs for each of PDU sessions corresponding to respective paths. For each of PDU sessions, part or all of SDAP to PHY protocols configured for each UE may be activated/deactivated. Part or all of the SDAP to PHY protocols for each UE configured in the gNB may be activated/deactivated, or part or all of the SDAP to PHY protocols configured by each UE may be activated/deactivated. The part or all of the SDAP to PHY protocols to be activated/deactivated may be the same between the gNB and each UE. Thus, the gNB can control the act/deact of communication between the gNB and the UEs.

In a case where part or all of the SDAP to PHY protocols configured by the gNB and/or the UEs are deactivated, the configuration may be released. Resources to be used by the gNB and the UEs can be reduced. As another method, a configuration of the part or all of the SDAP to PHY protocols configured by the gNB and/or the UEs may be maintained. The configuration may not be released. Since there is no need to perform the configuration again when making a change from "deact" to "act", activation can be performed at an early stage.

The gNB transmits, to the UEs, an act/deact request for a PDU session to be a target. The UEs that have received the act/deact request from the gNB activate/deactivate a configuration for the PDU session to be a target in accordance with the request. Examples of information to be included in the act/deact request will be disclosed. There are act/deact configuration information, an identifier of a PDU session to be activated/deactivated, QFI, information on a protocol to be activated/deactivated, information indicating whether to perform release, and the like. These pieces of information may be combined.

RRC signaling may be used for the transmission of the act/deact request from the gNB to the UEs. The request may be included in an access stratum (AS) configuration (which may be an RRC configuration) to the UEs and transmitted. A new message may be provided for the transmission of the request. As another method, the request may be included in an existing message. For example, the request may be included in an RRC reconfiguration message. By using such an existing message, it is possible to avoid complication of a signaling process. Transmission through RRC signaling enables a lot of information to be transmitted, and enables flexible control to be performed, for example, transmission in combination with other RRC configuration information can be performed.

MAC signaling may be used for the transmission of the act/deact request from the gNB to the UEs. The request may be included in a MAC control element (CE) and transmitted. Transmission through MAC signaling makes it possible to perform the transmission at an early stage. In addition, by applying HARQ, the reliability of act/deact control can be improved.

L1/L2 signaling may be used for the transmission of the act/deact request from the gNB to the UEs. For example, the request may be included in downlink control information (DCI) and transmitted on PDCC. Transmission through L1/L2 signaling makes it possible to perform the transmission at an earlier stage. Dynamic act/deact control can be performed.

As an RRC state of a UE to be deactivated, an RRC connected state may be maintained. As another method, the RRC state of the UE to be deactivated may be brought into an RRC inactive state. Alternatively, the above may be brought into an RRC idle state. In a case where the UE to be deactivated is brought into the RRC inactive or RRC idle state, an RRC release procedure may be performed. The gNB may trigger the RRC release procedure after transmitting the deact request to a UE. As another method, the gNB may make the deact request to the UE in the RRC release procedure. In a case where the deactivated UE in the RRC inactive or RRC idle state is activated, a paging procedure may be used. Paging may be used to transmit the act request from the gNB to a UE. Thus, it is possible to configure the RRC state of the UE to be deactivated, and to flexibly configure the UE depending on a load status, a resource usage, and the like of the gNB. In addition, by bringing the UE to be deactivated into the RRC inactive or RRC idle state, power consumption of the UE can be reduced.

Thus, the UEs can recognize an act/deact configuration from the gNB. The UEs can perform act/deact control of a configuration of a PDU session to be a target.

By using the method disclosed above, for example, the gNB can deactivate a protocol of a path to and from a UE not to be used for communication. Consequently, power consumption of the gNB and/or the UEs can be reduced.

The gNB may perform data mapping control by using an act/deact state of a path for communication between the gNB and each UE. For example, data of a PDU session between the gNB and a UE of which a path configuration is deactivated is mapped to a PDU session between the gNB and a UE of which a path configuration is activated. Thus, it is possible to reduce power consumption of an unused path in the gNB and the UEs.

For DL, the gNB maps data of a PDU session deactivated between the gNB and a UE to a PDU session activated between the gNB and a UE. For UL, each UE performs communication not by using a PDU session configured to be "deact" for the UE, but by using a PDU session configured to be "act".

For example, communication between the gNB and UE #1 is configured to be "act", and communication between the gNB and UE #2 is configured to be "deact". For DL, the gNB transmits data of PDU session #1 between the gNB and UE #1 to UE #1 as it is. The gNB maps data of PDU session #2 between the gNB and UE #2 to PDU session #1 between the gNB and UE #1 and transmits the data to UE #1. Thus, it is possible to transmit the data of PDU session #2 in addition to the data of PDU session #1 to UE #1 of which communication is configured to be "act". For UL, UE #1 performs communication by using PDU session #1. UE #1 transmits the data of PDU session #1 to the gNB. UE #2 does not communicate with the gNB. Thus, only UE #1 of which communication is configured to be "act" can communicate with the gNB by PDU session #1.

In a case where a service device communicates with the NW via a UE, the UE may request the device to switch the communication. For example, a request for switching to the UE or a request for switching to another UE may be made. The request may include, for example, an identifier of the UE, an identifier of a switching source UE, an identifier of the another UE, an identifier of a switching destination UE, and an act/deact state of each UE. These may be combined. For example, UE #1 in which communication between the gNB and the UE is configured to be "act" may transmit, to the device, a request for switching the communication to UE #1. The device that has received the switching request may communicate with UE #1. The device may communicate with the NW via UE #1. Thus, the device can communicate with a UE in an act state. The device can communicate with the NW via the UE in the act state.

A UE that performs communication between the device and the NW may be changed (or switched). For example, among a plurality of UEs used by the device for communication with the NW, a UE that performs communication between the device and the NW is changed from UE #1 to UE #2. For example, in a case where a communication environment deteriorates while the device is communicating with the NW via UE #1, communication between the device and the NW is changed so as to be performed via UE #2. The PDU sessions are individually established between each UE and the CN in the plurality of UEs used for communication between the device and the NW, and thereby it is possible to, when a UE used for communication is changed, perform communication via a UE after the change at an early stage.

The gNB controls paths between the gNB and the UEs. The gNB controls paths between the gNB and the UEs used for communication between the device and the NW. For example, the gNB changes communication through a path between the gNB and UE #1 to communication through a path between the gNB and UE #2. In a case where the gNB includes a CU and a DU, the gNB may be read as the CU. By the gNB controlling the paths, it is possible to change a UE that performs communication between the device and the NW at an early stage.

The gNB reloads data of the GTP-U configured for PDU session #1 onto data of the GTP-U for PDU session #2. The gNB maps the data of the GTP-U configured for PDU session #1 to the GTP-U for PDU session #2. A PDU session identifier may be used for the mapping. The TEID of the GTP-U may be used. The QFI may be used.

Regarding a method for reloading the data of the GTP-U configured for PDU session #1 onto the data of the GTP-U of PDU session #2, it is preferable to appropriately apply the above-disclosed method for reloading the data of the GTP-U configured for PDU session #2 onto the data of the GTP-U of PDU session #1. Thus, the gNB can change communication through the path between the gNB and UE #1 to communication through the path between the gNB and UE #2.

A UE used for communication between the device and the NW measures communication quality with the gNB used for communication between the device and the NW. The communication quality of Uu in 3GPP radio access technology (RAT) is preferably measured. The UE may measure communication quality with the device. It is preferable to measure communication quality in a scheme used for communication with the device. The UE may measure communication quality with another UE. The communication quality of SL in the 3GPP RAT is preferably measured. The communication quality is only required to indicate the quality of communication. Examples thereof include received power, received signal strength indicator (RSSI), RSRP, reference signal received quality (RSRQ), and signal to interference and noise ratio (SINR). These may be combined. Regarding the measurement of the communication quality, measurement of layer 3 may be used. Measurement of layer 1 may be used. These measurements may be combined. The UE can measure the communication quality in communication between the device and the NW.

The gNB may combine some or all of the above measurements and transmit, to the UE, the combination as a measurement configuration. The measurement configuration may include configuration of communication quality in a communication scheme between the UE and the device. The measurement configuration may be transmitted by using RRC signaling. The above may be included in an RRC message and transmitted. A new message or a new information element may be provided for the measurement configuration. Alternatively, an existing message or an existing information element may be used. For example, the measurement configuration may be included in measConfig and transmitted in an RRC reconfiguration message. It is possible to avoid complication of a measurement configuration procedure. In addition, these measurements may also be configured as loggable measurements. For example, the measurement configuration may be included in LoggedMeasurementConfiguration and transmitted in the RRC reconfiguration message. The UE preferably logs measurement results. Thus, the gNB can configure, for the UE, a measurement of communication quality in communication between the device and the NW.

The UE transmits the above measurement results to the gNB. The measurement results to be transmitted may include a measurement result of communication quality in a communication scheme between the UE and the device. The measurement results may be transmitted by using RRC signaling. The above may be included in an RRC message and transmitted. A new message or a new information element may be provided for the transmission of the measurement results. Alternatively, an existing message or an existing information element may be used. For example, the measurement results may be included in measresults and transmitted in a Measurement report message. It is possible to avoid complication of a measurement result transmission process.

The UE may use MAC signaling for the transmission of the measurement results to the gNB. For example, the measurement results may be included in a MAC CE and transmitted. The transmission can be performed with high reliability at an early stage. The UE may use L1/L2 signaling for the transmission of the measurement results to the gNB. For example, the PUCCH and/or the PUSCH may be used. For example, the measurement results may be included in a CSI report and transmitted. The measurement results can be transmitted at an earlier stage.

The gNB may change a path for communication between the device and the NW by using the measurement results received from the UE. The UE that performs communication between the device and the NW may be changed. Thus, the gNB can perform a configuration or make a change for a path suitable for the communication environment at an early stage.

The method has been disclosed in which the gNB changes the path for communication between the device and the NW. The UE may transmit, to the gNB, a request for changing the path for communication between the device and the NW. For the transmission of the path change request, for example, RRC signaling may be used. Alternatively, MAC signaling may be used. Alternatively, L1/L2 signaling may be used. In addition, transmission of the measurement results from the UE to the gNB may be used for the transmission of the change request. For example, Measurement report or a CSI report may be used. Thus, the UE can trigger a change of the path for communication between the device and the NW. The path change can be triggered in consideration of, for example, a load status of a UE in communication, and the communication status between the UE and the device.

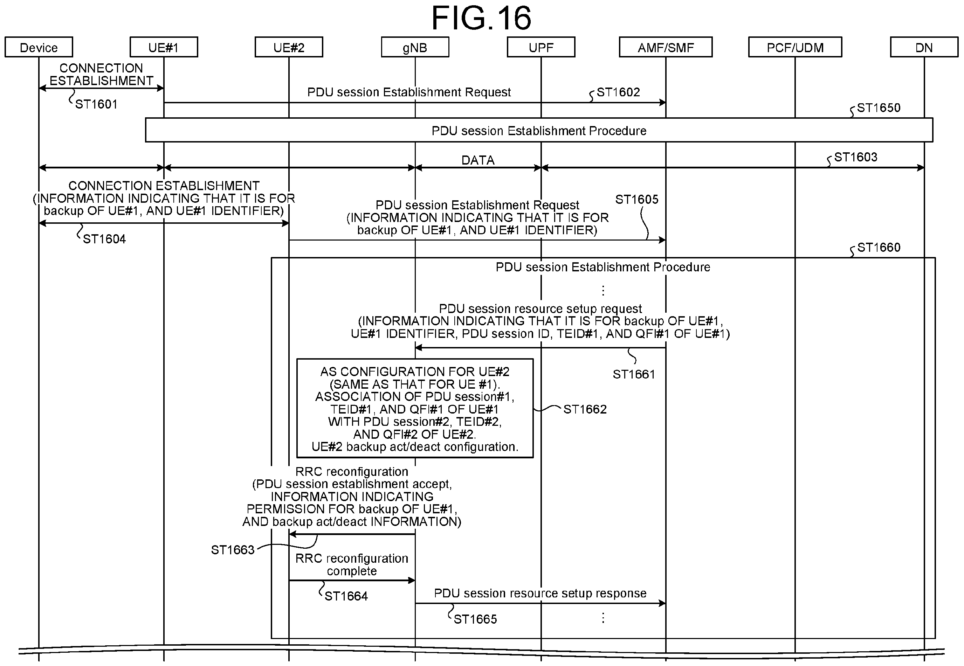

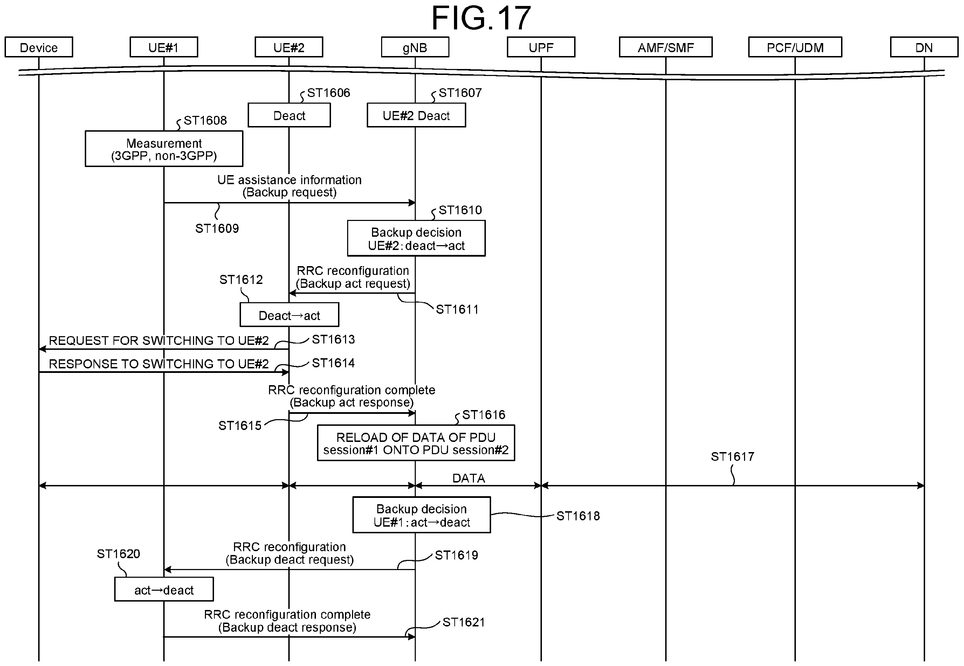

FIGS. 16 and 17 are each a diagram of a sequence illustrating an example of a method for changing a path for communication between the device and the NW in the first embodiment. FIG. 16 illustrates a first half of the sequence, and FIG. 17 illustrates a second half of the sequence. FIGS. 16 and 17 disclose a method in which the gNB determines the change of the UE that performs communication between the device and the NW. In detail, a method using a method for transmitting a request for communication using a 5G radio access system via UE #2 from the device is disclosed.

In step ST1601, the device establishes a connection for communication with UE #1 which is a first communication terminal. Hereinafter, a UE in which a PDU session for communication between the device and the NW is first established is sometimes referred to as UE #1, and a UE in which the PDU session is later established is sometimes referred to as UE #2. The device may establish the connection to UE #1 by using a non-3GPP communication scheme. In the connection establishment procedure, the device may transmit, to UE #1, information indicating that communication using the 5G radio access system via UE #1 is requested. UE #1 that has received the information transmits a PDU session establishment request to an AMF in step ST1602. In step ST1650, the AMF that has received the PDU session establishment request performs a PDU session establishment procedure among UE #1, the gNB, an SMF, the UPF, a PCF, a UDM, and a destination network (DN), and establishes PDU session #1. The PDU session establishment request may be included in the PDU session establishment procedure. Regarding the PDU session establishment procedure, it is preferable to appropriately apply, for example, the method disclosed in Non Patent Literature 31. Consequently, in step ST1603, data communication is performed among the device, UE #1, the gNB, the UPF, and the DN.

In step ST1604, the device establishes a connection for communication with UE #2 which is a second communication terminal. The device may establish the connection to UE #2 by using a non-3GPP communication scheme. After the connection establishment procedure, the device may transmit, to UE #2, a request for communication using the 5G radio access system via a UE. Examples of information to be included in the request will be disclosed.
(1) Information indicating a request for communication using the 5G radio access system via a UE.
(2) Information about UE #1.
(3) A combination of (1) and (2) .

Examples of the above (2) information about UE #1 will be disclosed.
(2-1) Information indicating that it is for backup of UE #1.
(2-2) An identifier of UE #1.
(2-3) An identifier of a PDU session established in UE #1.
(2-4) A TEID of the GTP-U for the PDU session established in UE #1.
(2-5) A QFI in the PDU session established in UE #1.
(2-6) Information indicating that communication with the NW is to be performed by using a plurality of UEs.
(2-7) A combination of (2-1) to (2-6).

UE #1 preferably transmits information about UE #1 to the device. The device preferably transmits the information received from UE #1 to UE #2.

As indicated in step ST1604, in the connection establishment procedure, the device may transmit, to UE #2, information indicating that communication using the 5G radio access system via UE #2 is requested. UE #2 can transmit the request at an early stage.

UE #2 that has received the request can recognize that UE #2 is used as a backup of UE #1 for communication between the device and the NW.

An identifier of UE #1 to be transmitted from the device to UE #2 may not be an identifier used in 3GPP. For example, a correspondence table between UE identifiers used in communication between the device and the UE and UE identifiers used in 3GPP may be provided. The UE that communicates with the device may store the correspondence table in advance. For example, the correspondence table may be stored in a subscriber identity module (SIM). UE #2 preferably derives an identifier of UE #1 used in 3GPP by using the identifier of UE #1 received from the device and the correspondence table.

In step ST1605, UE #2 transmits a PDU session establishment request to the AMF. As examples of information to be included in the PDU session establishment request in step ST1605, some or all of the information about UE #1 described above may be applied. The AMF that has received the PDU session establishment request may transmit, to the SMF, the information about UE #1. In addition, the SMF may transmit the information about UE #1 to the UPF. In step ST1660, a PDU session establishment procedure is performed among UE #2, the gNB, the SMF, the UPF, the PCF, the UDM, and the DN, and PDU session #2 is established. The PDU session establishment request may be included in the PDU session establishment procedure. Consequently, data communication is performed among the device, UE #2, the gNB, the UPF, and the DN. In the PDU session establishment procedure of step ST1660, the following processes are preferably performed.

A PDU session resource setup request to be transmitted from the AMF/SMF to the gNB in step ST1661 preferably includes information about UE #1 in addition to information to be included in a conventional PDU session resource setup request of UE #2. These pieces of information may be transmitted from the SMF to the AMF, and from the AMF to the gNB. These pieces of information may be transmitted from the AMF to the gNB. Some of these pieces of information may be transmitted from the SMF to the gNB via the AMF, and the rest of the information may be transmitted from the AMF to the gNB. For example, information to be included in the conventional PDU session resource setup request of UE #2 may be transmitted from the SMF to the gNB via the AMF, and the information about UE #1 may be transmitted from the AMF to the gNB.

Among pieces of the information about UE #1, the TEID and the QFI of the GTP-U for PDU session #1 established in UE #1 may not be included in the PDU session establishment request of UE #2, but be added in this process. The AMF/SMF may derive the TEID and the QFI of the GTP-U for PDU session #1 established in UE #1 from the PDU session identifier of UE #1, and add the TEID and the QFI to this process. Since there is no need to include these pieces of information in the connection establishment procedure from the device to UE #2 and the PDU session establishment request of UE #2, the amount of information to be transmitted can be reduced.

Thus, the gNB can recognize that the PDU session to be established in UE #2 is for backup of UE #1, and information about the PDU session established in UE #1.

In step ST1662, the gNB performs a configuration of an AS for UE #2. At that time, a configuration for backup of UE #1 may be performed. The same configuration as that for UE #1 may be performed. The gNB associates the PDU session, the TEID and the QFI of the GTP-U of UE #1 with the PDU session, the TEID and the QFI of the GTP-U of UE #2, respectively. In the gNB, the gNB maps the data of PDU session #2 of UE #2 to PDU session #1 of UE #1. A method for performing mapping in the gNB is preferably the method disclosed above.

In step ST1662, the gNB may determine an act/deact process of a path between the gNB and each UE. For example, a path for communication between the gNB and UE #1 is activated, and a path for communication between the gNB and UE #2 for backup is deactivated. Thus, it is possible to reduce power consumption of the gNB and UE #2 that is for backup and not normally used.

In step ST1663, the gNB transmits a PDU session establishment accept to UE #2. An RRC reconfiguration message may be used for the transmission. The PDU session establishment accept may include information indicating permission for backup of UE #1, and an act/deact request for the path for communication between the gNB and UE #2. In this example, the gNB makes a request to UE #2 for a deact configuration. A method for making an act/deact request for the path is preferably the method disclosed above.

UE #2 that has received the PDU session establishment accept establishes a PDU session with the CN, and performs an AS configuration with the gNB. In addition, UE #2 performs an act/deact configuration of a path for communication with the gNB. In this example, UE #2 performs a deact configuration. UE #2 that has completed the configuration transmits a configuration complete message to the gNB in step ST1664. An RRC reconfiguration complete message may be used for the transmission. In step ST1665, the gNB transmits, to the AMF/SMF, PDU session resource setup completion in UE #2.

By performing such processes in the PDU session establishment procedure in step ST1660, UE #2 can establish the PDU session as a backup UE of UE #1, and in a case where UE #2 is not used normally, the data of PDU session #2 can be mapped to PDU session #1.

In step ST1606, UE #2 deactivates the path for communication with the gNB. In step ST1607, the gNB deactivates the path for communication with UE #2.

An example of a sequence will be disclosed in which a path for communication between the device and the NW is changed from a path via UE #1 to a path via UE #2.

In step ST1608, UE #1 measures communication quality with the gNB and communication quality with the device in communication between the device and the NW. Due to the deterioration of measured quality of either or both of the above, UE #1 determines to request a change of the path for communication between the device and the NW. In step ST1609, UE #1 transmits, to the gNB, a request for changing the path for communication between the device and the NW. UE #1 may include measurement results of the communication quality in the path change request, and perform transmission thereof to the gNB. The measurement results may be results of measurements by the device. UE #1 preferably acquires the results of measurements by the device from the device. The results of measurements by the device may be, for example, communication quality with UE #1, or communication quality with another UE (UE #2). UE #1 may transmit the path change request by using a UE assistance information message.

The gNB that has received the path change request determines to change the path via UE #1 in step ST1610. It is preferable to select a path via UE #2 in which the PDU session is established. The path can be changed at an early stage. In step ST1610, the gNB changes the configuration of the path for communication with UE #2 from "deact" to "act". In step ST1611, the gNB transmits, to UE #2, an act/deact request for the path for communication with UE #2. Here, the act request is transmitted. For example, an RRC reconfiguration message may be used. UE #2 that has received the act request for the path for communication with UE #2 from the gNB changes the path for communication with the gNB to "act" in step ST1612. Thus, the path for communication between the gNB and UE #2 can be configured to be "act".

In step ST1613, UE #2 transmits, to the device, a request for switching the path to a path for communication via UE #2. The device that has received the path switching request starts communication via UE #2. The device may stop communication via UE #1. In step ST1614, the device transmits, to UE #2, a response to path change to the path for communication via UE #2. In step ST1615, UE #2 transmits, to the gNB, a response indicating that the path for communication between the gNB and UE #2 has been configured to be "act". The response may be included in an RRC reconfiguration complete message and transmitted. The response may be transmitted in a case where a path switching response is received from the device. The gNB can recognize that the device has switched the path to the path to UE #2. As another method, the response may be transmitted in a case where an act configuration process from the gNB is performed in step ST1612. A process of path change to the path to UE #2 by the gNB can be performed at an early stage.

In step ST1616, the gNB makes a path change from the path for the communication via UE #1 to the path for the communication via UE #2. The gNB maps the data of PDU session #1 to PDU session #2. A method for performing mapping in the gNB is preferably the method disclosed above. In step ST1617, data communication can be performed among the device, UE #2, the gNB, the UPF, and the DN.

The gNB that has performed the process of path change to the path to UE #2 may deactivate the path for communication with UE #1. In step ST1618, the gNB changes the configuration of the path for communication with UE #1 from "act" to "deact". In step ST1619, the gNB transmits, to UE #1, an act/deact request for the path for communication between the gNB and UE #1. Here, the deact request is transmitted. For example, an RRC reconfiguration message may be used for the transmission. UE #1 that has received the deact request for the path for communication between the gNB and UE #1 from the gNB changes the path for communication with the gNB to "deact" in step ST1620. In step ST1621, UE #1 transmits, to the gNB, a response indicating that the path for communication with the gNB has been configured to be "deact". Thus, the path for communication between the gNB and UE #1 can be configured to be "deact". Power consumption of the gNB and UE #1 can be reduced.

Regarding control of path change from the path for communication via UE #2 to the path for communication via UE #1, it is preferable to appropriately apply the method for controlling path change from the path for communication via UE #1 to the path for communication via UE #2 described above. The path change can be performed similarly.

Thus, the gNB can control the paths between the gNB and the UEs used for communication between the device and the NW. For example, communication is performed between the device and the NW via UE #1 normally, and in a case where the radio wave propagation environment deteriorates, the gNB can change the communication to communication between the device and the NW via another UE (UE #2). Since a change in a PDU session established in each UE is conventionally accompanied by control of the CN, for example, the AMF, the SMF, or the UPF, signaling to and from the CN is required, and a change of a UE cannot be controlled at an early stage. By the gNB controlling the path change, it is possible to change the path at an earlier stage. Therefore, it is possible to improve reliability and robustness in a case where the device performs communication by using the 5G radio access system via a UE.

It has been disclosed in the above that a plurality of UEs are used for communication between the device and the NW, and communication is performed between the device and the NW via one UE among the plurality of UEs. Communication may be performed between the device and the NW not only via one UE but also via a plurality of UEs. Communication may be performed between the device and the NW via one or a plurality of UEs, and communication may not be performed between the device and the NW via another one or another plurality of UEs. Communication between the device and the NW may be performed by using a path or paths between the gNB and one or a plurality of UEs among the plurality of UEs for communication between the device and the NW.

One or a plurality of UEs among one or a plurality of UEs that perform communication between the device and the NW may be changed. A path or paths between one or a plurality of UEs and the gNB may be changed to a path or paths between another one or another plurality of UEs and the gNB.

As a method for performing the above processes, it is preferable to appropriately apply the method disclosed above. Since it is possible to flexibly select a UE that performs communication between the device and the NW, communication can be performed by using a more suitable path depending on the radio wave propagation environment and the situation of the UE. It is possible to improve reliability and robustness in the case where the device performs communication by using the 5G radio access system via a UE.

### First Modification of First Embodiment.

Another method for solving the problem disclosed in the first embodiment will be disclosed.

A UE group including one or a plurality of UEs used for communication between the device and the NW (sometimes simply referred to as a UE group) is provided in advance. For example, the UE group may be provided for each service provided in communication between the device and the NW. The UE group may be provided for each QoS required for communication between the device and the NW. The UE group may be provided for each QoS between each UE and the NW in communication between the device and the NW. The UE group may be provided depending on the locations of UEs.

Information about UE groups is stored in the NW. A node or a function that stores the information about the UE groups may be, for example, a node or a function involved in the PDU session establishment procedure. Examples thereof include the UDM, the PCF, the AMF, the SMF, a BSF, the gNB, the CU, and the DU. Any one node or function may hold the information about the UE groups. A notification of the information about the UE groups may be performed between nodes and/or functions. For example, the UDM may hold the information about the UE groups and the information may be transmitted from the UDM to the PCF, from the PCF to the AMF, from the AMF to the SMF, and from the AMF to the gNB.

Examples of the information about the UE groups will be disclosed.
(1) Identifiers of UE groups.
(2) Identifiers of UEs included in UE groups.
(3) A registration management (RM) state of each UE.
(4) A connection management (CM) state of each UE.
(5) An RRC state of each UE.
(6) A PDU session establishment state of each UE.
(7) Information about UEs.
(8) A combination of (1) to (7) .

The above (2) may be a list of identifiers of UEs included in UE groups. The above (3) may be an EPS mobility management (EMM) state in LTE. For example, registration may be performed by each UE. For example, the RM state of each UE may be a connected state. The above (4) may be an EPS connection management (ECM) state in LTE. For example, the CM state of each UE may be a connected state. The above (6) may be a PDN connection in LTE. The above (7) is preferably information obtained by replacing, in the pieces of information described in the above examples of information about UE #1, UE #1 with UEs included in UE groups.

Information included in the information about the UE groups may be different for each node or function that stores the information about the UE groups. For example, the information about the UE groups stored in the UDM may include the above (1) and (2), the information about the UE groups stored in the AMF/SMF may include the above (1) to (6) and (7), and the information about the UE groups stored in the gNB may include the above (1), (2), and (5) to (7). Each node or function may change, add, or delete the information about the UE groups. Thus, it is possible to flexibly store the information about the UE groups depending on a process of each node or function, and depending on the state of each UE.

Subgroups may be provided in the UE groups for each of the RM state, the CM state, the RRC state, and the PDU session establishment state of each UE. Each node or function may store the UE subgroups. In addition, each node or function may change, add, or delete a UE included in the UE subgroups. The UE subgroups can be used depending on the state of each UE.

In a registration procedure, a service request procedure, the PDU session establishment procedure, or a PDU session release procedure between each UE and the NW, each node or function may change, add, or delete information about the state of each UE described above to or from the information about the UE groups. Alternatively, a UE included in the UE subgroups may be changed, added, or deleted.

A configuration of each UE group may be performed by a NW node. For example, the configuration may be performed by a CN node. For example, the configuration may be performed by the AMF. For example, the configuration may be performed by a RAN node. For example, the configuration may be performed by the gNB. For example, the configuration may be performed by a management node. For example, the configuration may be performed by Operations, Administration and Maintenance (OAM). As another method, the configuration of each UE group may be performed by an application and a notification thereof may be performed to the NW node.

Thus, it is possible to handle, in the NW, information on one or a plurality of UEs used for communication between the device and the NW.

In the first embodiment, the method has been disclosed in which the device establishes the connection for communication with UE #2, and transmits, to UE #2, the request for communication using the 5G radio access system via a UE. In the first embodiment, it has been disclosed that the device may include the identifier of UE #1 or information about the PDU session established in UE #1 in the request. In the present modification, a method will be disclosed in which these pieces of information are not included in the request. A part different from the method disclosed in the first embodiment will be mainly disclosed. Regarding other parts, it is preferable to appropriately apply the method disclosed in the first embodiment.

The device establishes a connection for communication with UE #2, and transmits, to UE #2, a request for communication using the 5G radio access system via a UE. Examples of information to be included in the request will be disclosed.
(1) Information indicating a request for communication using the 5G radio access system via a UE.
(2) Information indicating that it is for backup.
(3) Information indicating that communication with the NW is to be performed by using a plurality of UEs.
(4) A combination of (1) to (3).

In other words, among the examples of the information to be included in the request for communication using the 5G radio access system via a UE disclosed in the first embodiment, the identifier of UE #1 and the information about the PDU session established in UE #1 are not included.

UE #2 transmits a PDU session establishment request to the AMF. Examples of the information to be included in the PDU session establishment request may be some or all of the information to be included in the request for communication using the 5G radio access system via a UE in the present modification. In other words, the identifier of UE #1 and the information about the PDU session established in UE #1 are not included.

The AMF that has received the PDU session establishment request may transmit, to the SMF, information included in the request. The AMF/SMF obtains information about UE groups from the UDM. The AMF/SMF may transmit a request for the information about the UE groups to the UDM. An identifier of UE #2 and/or an identifier of a UE group to which UE #2 belongs may be included in the request. The UDM transmits the information about the UE groups to the AMF/SMF. The AMF/SMF derives a UE belonging to the same group as that UE #2 belongs to by using the information about the UE groups received from the UDM. In addition, a UE in which a PDU session is established may be derived. In this modification, the derived UE is UE #1. It has been disclosed that the AMF or the SMF obtains UE groups from the UDM, and derives UE #1. A node or function of another CN may derive UE #1 by using the UE groups.

In the PDU session establishment procedure of UE #2, the information about UE #1 may be transmitted from the AMF to the SMF. In the PDU session establishment procedure of UE #2, the information about UE #1 may be transmitted from the SMF to the UPF. The AMF/SMF may transmit the information about UE #1 to the gNB. Thus, the gNB can recognize that the PDU session to be established in UE #2 is for backup of UE #1, and information about the PDU session established in UE #1.

Thus, the gNB can control the change of the UE that performs communication between the device and the NW with no transmission of the identifier of UE #1 or the information about the PDU session established in UE #1 from the device to UE #2. The gNB can control the path for communication between the device and the NW.

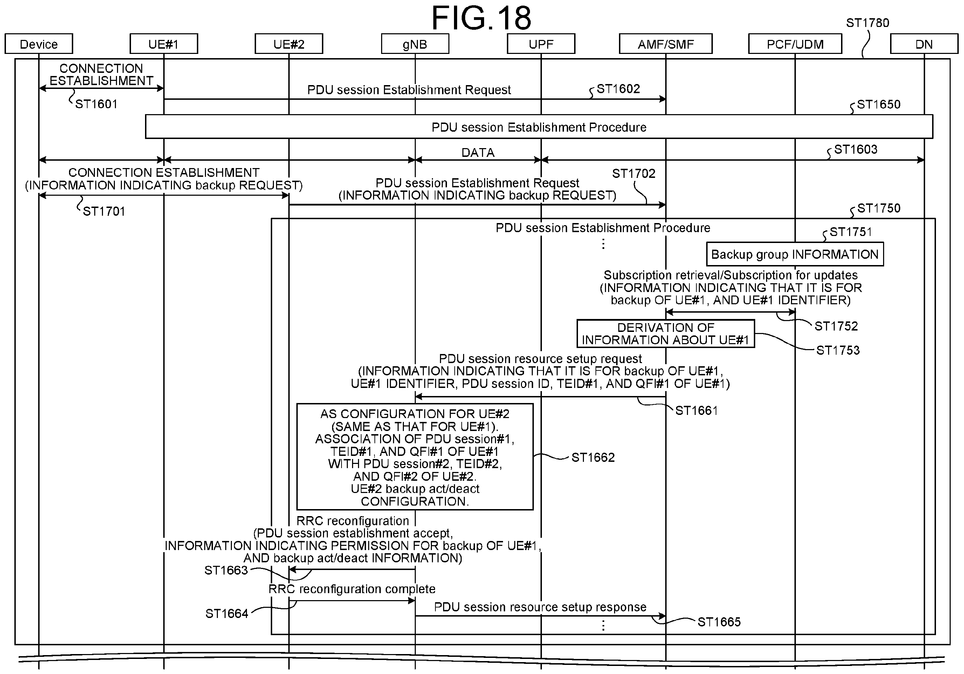

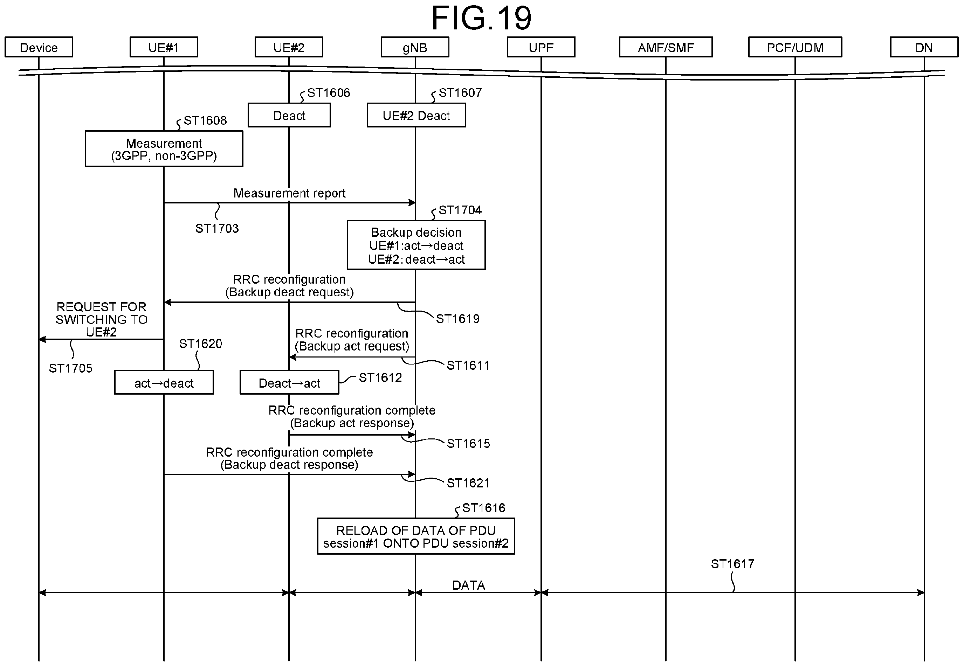

FIGS. 18 and 19 are each a diagram of a sequence illustrating an example of a method for changing a path for communication between the device and the NW in the first modification of the first embodiment. FIG. 18 illustrates a first half of the sequence, and FIG. 19 illustrates a second half of the sequence. FIGS. 18 and 19 disclose a method in which the device may not transmit, to UE #2, the identifier of UE #1 or the information about the PDU session established in UE #1. In FIGS. 18 and 19, steps common to those in FIGS. 16 and 17 are denoted by the same step numbers as those therein, and a common description will be omitted.

In step ST1701, the device establishes a connection for communication with UE #2. The device may establish the connection to UE #2 by using a non-3GPP communication scheme. After the connection establishment procedure, the device may transmit, to UE #2, a request for communication using the 5G radio access system via a UE. In the connection establishment procedure, the device may transmit, to UE #2, information indicating that communication using the 5G radio access system via UE #2 is requested. The request can be transmitted at an early stage. UE #2 preferably includes, in the request, examples of the information to be included in the request for communication using the 5G radio access system via a UE disclosed above.

UE #2 that has received the request can recognize that UE #2 is used as a backup of UE #1 for communication between the device and the NW.

In step ST1702, UE #2 transmits a PDU session establishment request to the AMF. As an example of the information to be included in the PDU session establishment request in step ST1702, it is preferable to apply the information to be included in the request for communication using the 5G radio access system via a UE in the present modification disclosed above.

In step ST1750, a PDU session establishment procedure is performed among UE #2, the gNB, the SMF, the UPF, the PCF, the UDM, and the DN. In the PDU session establishment procedure of step ST1750, the following processes are preferably performed. In step ST1751, the PCF or the UDM stores information about UE groups. The information about the UE groups may be held in the PCF or the UDM. The information about the UE groups may be, for example, identifiers of the UE groups or identifiers of UEs included in the UE groups.

The AMF that has received the PDU session establishment request may transmit, to the SMF, information included in the request. In step ST1752, the AMF/SMF obtains the information about the UE groups from the UDM. In step ST1752, the AMF/SMF may transmit a request for the information about the UE groups to the UDM. An identifier of UE #2 and/or an identifier of a UE group to which UE #2 belongs may be included in the request. In step ST1752, the UDM transmits the information about the UE groups to the AMF/SMF.

In step ST1753, the AMF/SMF derives a UE belonging to the same group as that UE #2 belongs to by using the information about the UE groups received from the UDM. In addition, a UE in which a PDU session is established may be derived.

In the PDU session establishment procedure of UE #2, the information about UE #1 may be transmitted from the AMF to the SMF. In the PDU session establishment procedure of UE #2, the information about UE #1 may be transmitted from the SMF to the UPF. In step ST1661, the AMF/SMF may transmit the information about UE #1 to the gNB. Thus, the gNB can recognize that the PDU session to be established in UE #2 is for backup of UE #1, and information about the PDU session established in UE #1, and thus can associate the PDU session of UE #2 with the PDU session of UE #1. In addition, the AS can be configured for UE #2.

Another example of the sequence will be disclosed in which the path for communication between the device and the NW is changed from the path via UE #1 to the path via UE #2. In step ST1608, UE #1 measures communication quality with the gNB and communication quality with the device in communication between the device and the NW. In step ST1703, UE #1 transmits measurement results of the communication quality to the gNB. In a case where the gNB transmits a measurement configuration to a UE, the configuration may include a condition that triggers a report of the measurement results. For example, a threshold of the communication quality may be transmitted. The UE may report the measurement results, for example, in a case where the measurement results are below the threshold.

In step ST1704, the gNB determines to change the path via UE #1. It is preferable to select a path via, as a UE to be used for communication after the path change, for example, UE #2 that belongs to the same UE group and in which the PDU session is established. The path can be changed at an early stage. The gNB may make the determination by using the measurement results received from the UE. In addition, in step ST1704, the gNB changes the configuration of the path for communication with UE #2 from "deact" to "act", and changes the configuration of the path for communication with UE #1 from "act" to "deact". After the determination, the gNB transmits, to UE #1 and UE #2 in steps ST1619 and ST1611, respectively, act/deact requests for paths for communication with the UEs. The deact request is transmitted to UE #1, and the act request is transmitted to UE #2. In step ST1619, the gNB may transmit an identifier of a UE to be used for communication after the path change (UE #2) to UE #1. UE #1 can recognize the UE to be used for communication after the path change. In step ST1611, the gNB may transmit an identifier of a UE used for communication before the path change (UE #1) to UE #2. UE #2 can recognize the UE used for communication before the path change. In step ST1620, UE #1 changes the path for communication with the gNB to "deact". In step ST1612, UE #2 changes the path for communication with the gNB to "act".

UE #1 that has received a path change request from the gNB transmits, to the device, a request for switching the path to a path for communication via UE #2 in step ST1705. The device that has received the path switching request starts communication via UE #2. The device may stop communication via UE #1.

The device that has received the path switching request may transmit, to UE #1, a response to the path switching request. UE #1 can clearly recognize that the device has performed switching to UE #2. The device that has received the path switching request may transmit, to UE #2, a response to the path switching request. The request response may include information about a switching source UE. The request response may include information about communication via the switching source UE. UE #2 can clearly recognize that the device has switched the path to the path to UE #2.

UE #1 that has changed the path for communication with the gNB to "deact" in step ST1620 transmits, to the gNB in step ST1621, a response indicating that the path for communication between the gNB and UE #1 has been configured to be "deact". UE #2 that has changed the path for communication with the gNB to "act" in step ST1612 transmits, to the gNB in step ST1615, a response indicating that the path for communication between the gNB and UE #2 has been configured to be "act".

In step ST1616, the gNB makes a path change from the path for the communication via UE #1 to the path for the communication via UE #2. The gNB maps the data of PDU session #1 to PDU session #2. A method for performing mapping in the gNB is preferably the method disclosed above. In step ST1617, data communication can be performed among the device, UE #2, the gNB, the UPF, and the DN.

The gNB may transmit the information about the UE groups to UE #1. The gNB may transmit information about UEs belonging to a UE group to UE #1. For example, in the process of step ST1650, the gNB may transmit the information about the UE groups to UE #1. For example, by performing steps ST1751, ST1752, and ST1661 in the process of step ST1650, the gNB may acquire the information about the UE groups. The gNB preferably transmits the information about the UE groups to UE #1. UE #1 can recognize UEs belonging to the UE group.

Thus, the gNB can control the change of the UE that performs communication between the device and the NW with no transmission of the identifier of UE #1 or the information about the PDU session from the UE to the device and from the device to the UE. The gNB can control the path for communication between the device and the NW. Therefore, an effect similar to that in the first embodiment can be obtained.

The identifier of UE #1 and the information about the PDU session are information used in the 3GPP RAT. The device does not need to acquire the information used in the 3GPP RAT, and the necessity of transmission and reception between the UE and the device of the information used in the 3GPP RAT is eliminated. Therefore, the device can perform communication using the 5G radio access system via a UE with higher security. In addition, the amount of information in communication between the device and the UE can be reduced. A load on the device can be reduced.

### Second Modification of First Embodiment.

Another method for solving the problem disclosed in the first embodiment will be disclosed.

In the first embodiment, the method has been disclosed in which UE #1 transmits, to the gNB, the request for changing the path for communication between the device and the NW. In the present modification, a method will be disclosed in which UE #2 makes a request to the gNB for change of the path for communication between the device and the NW. A part different from the methods disclosed in the first embodiment and the first modification of the first embodiment will be mainly disclosed. Regarding other parts, it is preferable to appropriately apply the methods disclosed in the first embodiment and the first modification of the first embodiment.

Direct communication is established between UE #1 and UE #2. PC5 which is an interface between UEs may be used. A PC5 unicast link is established by UE #1 and UE #2. An SL RRC connection may be established by UE #1 and UE #2. An SL RRC reconfiguration process may be performed by UE #1 and UE #2. Thus, direct communication can be performed between UE #1 and UE #2.

A PC5 unicast link establishment procedure between UE #1 and UE #2 may be triggered by UE #1, or UE #2. The UE that triggers the procedure preferably transmits a direct connection request to a UE to which the device can be connected. The UE that triggers the procedure may derive the UE to which the device can be connected by using, for example, information about UEs belonging to the UE group. The gNB preferably notifies the UE of the information about UEs belonging to the UE group.

In the first modification of the first embodiment, it has been disclosed that, for example, in the PDU session establishment procedure of UE #2, the AMF/SMF transmits the information about UE #1 to the gNB. The gNB may transmit the information about UE #1 to UE #2. In addition, the gNB may transmit information about UE #2 to UE #1. The information may be transmitted in the PDU session establishment procedure, or may be transmitted after the PDU session establishment procedure. RRC signaling may be used for the transmission of the information. For example, the information may be included in an RRC reconfiguration message and transmitted. MAC signaling may be used for the transmission of the information. For example, the request may be included in a MAC CE and transmitted. L1/L2 signaling may be used for the transmission of the information. For example, the information may be included in DCI and transmitted.

Although the method has been disclosed in which the gNB notifies the UE of the information about UEs belonging to the UE group, the information may be transmitted from a node or function of the CN to the UE via the gNB. Thus, the UE can recognize a UE used for communication between the device and the NW. The UE preferably derives, by using the information, a UE to which the device can be connected.

As another method, the gNB may transmit the information about the UE groups to the UE. The CN may transmit the information about the UE groups to the UE via the gNB. In a registration procedure, a service request procedure, the PDU session establishment procedure, or a PDU session release procedure between the UE and the NW, the information about the UE groups may be transmitted from each node or function of the CN to the UE via the gNB. Similar to the above method, the UE can recognize a UE used for communication between the device and the NW. The UE preferably derives, by using the information, a UE to which the device can be connected.

In a case where a UE (for example, UE #1) derives, by using the information about the UE groups, a UE to which the device can be connected (for example, UE #2), and then, for example, UE #1 establishes a PC5 unicast link to UE #2, a PDU session of UE #2 may not be established yet at this time point. In that case, UE #2 may perform the PDU session establishment procedure after establishing the PC5 unicast link to UE #1. Thus, mapping control between PDU session #1 and PDU session #2 can be performed by the gNB.

The method has been disclosed in which in the PC5 unicast link establishment procedure between UE #1 and UE #2, the UE that triggers the procedure transmits the direct connection request to the UE to which the device can be connected. As another method, a UE in the UE group may perform a discovery procedure. In the discovery procedure, the UE may transmit the information about the UE groups. For example, the UE may include the information about the UE groups in an announcement message and perform transmission thereof. For example, the UE may include the information about the UE groups in a Solicitation message and perform transmission thereof. For example, the UE may include the information about the UE groups in a Response message and perform transmission thereof. Consequently, the UE can detect a UE belonging to the UE group. The UE preferably performs the PC5 unicast link establishment procedure with the detected UE belonging to the UE group.

As another method, the UE may perform the discovery procedure in the UE group. For example, the UE may transmit an announcement message to UEs in the UE group. For example, the UE may transmit a Solicitation message to the UEs in the UE group. Consequently, the UE can detect a UE belonging to the UE group.

The UE can derive, by using the information about UEs belonging to the UE group, the UE to which the device can be connected. The UE can establish a PC5 unicast link with the UE to which the device can be connected.

The UE may use results of measurements by the UE as another method for deriving the UE to which the device can be connected. In addition, measurement results acquired from the device may be used. Regarding a method related to these measurements, it is preferable to appropriately apply the method disclosed in the first embodiment. The above-disclosed method in which the UE derives the UE to which the device can be connected may be combined. The UE can establish a PC5 unicast link with the UE to which the device can be connected.

In a case where change of the path for communication used by the device is necessary, UE #1 to which the device is being connected transmits, to UE #2, a request for changing the path for communication between the device and the NW. A PC5 unicast link may be used for the transmission. SL RRC signaling may be used. SL MAC signaling may be used. The request may be included in SCI and transmitted on the PSCCH. The request may be included in the PSSCH and transmitted. The request may include information about devices. For example, information about a device unable to be communicated with may be included. For example, information about a UE unable to be communicated with may be included. For example, results of measurements of communication quality in UE #1 may be included. For example, the above may be results of measurements of the communication quality by the device acquired by UE #1.

A method for releasing a deact state of a path between a UE and the gNB will be disclosed. The gNB transmits, to the UE, an uplink physical channel configuration or an uplink signal configuration that can be transmitted in the deact state. The uplink physical channel configuration may be, for example, the PRACH or the PUCCH. The uplink signal configuration may be, for example, a sounding reference signal (SRS). The gNB preferably transmits the uplink physical channel configuration or the uplink signal configuration that can be transmitted in the deact state before transmitting the deact configuration to the UE or together with the transmission of the deact configuration. After transmitting the deact configuration to the UE, with the use of the uplink physical channel configuration or the uplink signal configuration that can be transmitted in the deact state and has been transmitted to the UE, the gNB waits for the channel or the signal.

The channel or the signal is preferably used as a deact-state release request. For example, a reference signal (RS) indicating the deact-state release request may be provided. The RS may be, for example, an SRS. For example, a PRACH indicating a deact-state release request may be provided. When the gNB receives the channel or the signal, the gNB can recognize that it is the deact-state release request. As another method, the request is preferably included in the channel or the signal. For example, deact-state release request information is preferably included in the channel, for example, the PUCCH. For example, a scheduling request (SR) indicating a deact-state release request is preferably provided, and the SR is preferably included in the channel, for example, the PUCCH. For example, the deact-state release request information may be included in MSG A in a RACH procedure.

The UE transmits the channel or the signal to the gNB for the deact-state release request. The gNB that has been waiting by using the configuration of the channel or the signal can receive the channel or the signal from the UE. Consequently, the gNB can receive the deact-state release request from the UE.

UE #2 transmits a deact-state release request to the gNB. The gNB that has received the request transmits an act configuration to UE #2. The gNB and UE #2 change a path configuration of the gNB and UE #2 from the deact state to the act state. Thus, it is possible to release the deact state of a path between UE #2 and the gNB and to bring the path into the act state.

UE #2 transmits, to the gNB, a request for changing the path for communication between the device and the NW. The request may include some or all of the information received from UE #1. The gNB can determine the change of the path for communication between the device and the NW via UE #1 by receiving, from UE #2, the request for changing the path for communication between the device and the NW. The gNB preferably changes the path to a path for communication between the device and the NW via UE #2. Regarding a method of change, it is preferable to appropriately apply the methods disclosed in the first embodiment and the first modification of the first embodiment.

Regarding a method for transmitting, from UE #2 to the gNB, the request for changing the path for communication between the device and the NW, it is preferable to appropriately apply the method for transmitting the deact-state release request described above. The transmission of the deact-state release request described above from UE #2 to the gNB may be regarded as the request for changing the path for communication between the device and the NW. Thus, signaling can be reduced.

An inter-UE direct communication establishment procedure may be performed before the PDU session establishment procedure. For example, a direct communication establishment procedure between UE #1 and UE #2 may be performed before the PDU session establishment procedure of UE #2. UE #1 may transmit, to UE #2, a request for changing the path for communication between the device and the NW. The PDU session establishment procedure in UE #2 can be performed as necessary.

With the use of inter-UE direct communication, UE #1 may transmit information about UE #1 to UE #2. UE #2 can recognize the information about UE #1. For example, it is effective in a case where the method disclosed in the first embodiment is applied to the PDU session establishment procedure in UE #2.

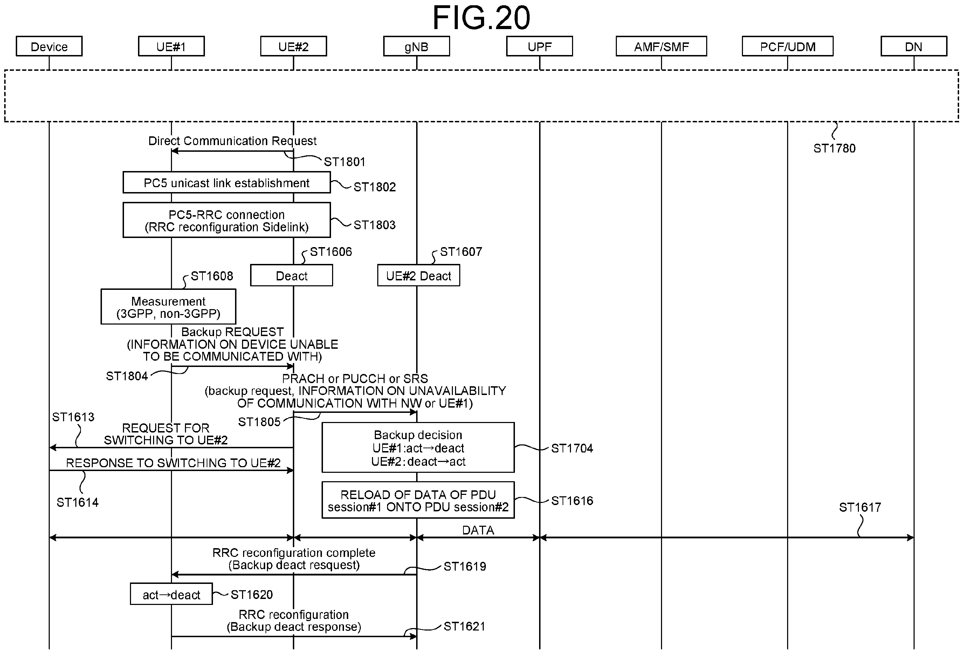

FIG. 20 is a diagram of a sequence illustrating an example of a method for changing a path for communication between the device and the NW in the second modification of the first embodiment. FIG. 20 discloses a method in which UE #2 transmits, to the gNB, a request for changing the path for communication between the device and the NW. In FIG. 20, steps common to those in FIGS. 16 and 17 are denoted by the same step numbers as those therein, and a common description will be omitted.

In step ST1801, UE #2 transmits a direct connection request to UE #1. Before executing the step, the gNB may transmit, to UE #2, the information about UEs belonging to the UE group in step ST1780. With the use of the information, UE #2 may transmit the direct connection request to UE #1. The direct connection request is preferably made in SL. For example, the request may be transmitted by using Direct Communication Request. In step ST1802, a PC5 unicast link is established between UE #2 and UE #1. In step ST1803, a PC5 RRC connection is established between UE #2 and UE #1. SL RRC reconfiguration may be transmitted in the step. For example, an RRC reconfiguration sidelink message may be used. Thus, direct communication can be performed between UE #1 and UE #2 on PC5.

The gNB may transmit the information about the UE groups to UE #1. The gNB may transmit information about UEs belonging to a UE group to UE #1. For example, in the process of step ST1650 in step ST1780, the gNB may transmit the information about the UE groups to UE #1. For example, by performing steps ST1751, ST1752, and ST1661 in the process of step ST1650, the gNB may acquire the information about the UE groups. The gNB preferably transmits the information about the UE groups to UE #1. UE #1 can recognize UEs belonging to the UE group.

In the example in FIG. 20, the UE that has performed the PDU session establishment procedure later (UE #2) transmits the direct connection request to the UE that has performed the PDU session establishment procedure earlier (UE #1), but the UE that has performed the PDU session establishment procedure earlier may transmit the direct connection request to the UE that has performed the PDU session establishment procedure later. Regarding processes subsequent to the direct connection request, it is preferable to appropriately apply the above-described method. Thus, direct communication can be performed similarly between UEs belonging to the UE group on PC5.

In a case where a connection request from UE #1 and a connection request from UE #2 conflict with each other, the later connection request may be treated as valid. The earlier connection request may be ignored. Alternatively, in the case where the connection request from UE #1 and the connection request from UE #2 conflict with each other, the earlier connection request may be treated as valid. The later connection request may be ignored. It is possible to reduce malfunction related to connection processes between UEs.

In step ST1804, UE #1 transmits, to UE #2, a request for changing the path for communication between the device and the NW by using the established PC5 unicast link. The change request is preferably transmitted in a Backup request. The request may include information about the device to which change of the path is requested. Consequently, UE #2 can recognize that change of the path for communication between the device and the NW has been requested. In addition, the configuration of the path for communication with the gNB may be changed from "deact" to "act" when receiving the request from UE #1. In steps ST1613 and ST1614, UE #2 may perform, on the device, a process for making a request for switching the path to a path for communication via UE #2. Thus, path switching can be performed at an early stage.

In step ST1805, UE #2 transmits, to the gNB, a request for changing the path for communication between the device and the NW. The gNB can recognize that change of the path for communication between the device and the NW has been requested. The gNB can determine the change of the path for communication between the device and the NW and perform the change process.

It has been disclosed that UE #2 may change the configuration of the path for communication with the gNB from "deact" to "act" when receiving, from UE #1, the request for changing the path for communication between the device and the NW. Another method will be disclosed. UE #2 does not change the configuration of the path for communication with the gNB from "deact" to "act" when receiving, from UE #1, the request for changing the path for communication between the device and the NW. UE #2 transmits, to the gNB, a request for changing the path for communication between the device and the NW. The gNB that has received the request transmits an act configuration to UE #2. The gNB and UE #2 change a path configuration of the gNB and UE #2 from the deact state to the act state. Thus, it is possible to release the deact state of a path between UE #2 and the gNB and to bring the path into the act state.

Thus, the request for changing the path for communication between the device and the NW can be transmitted from UE #1 to UE #2 and from UE #2 to the gNB. The gNB can control the path for communication between the device and the NW. Therefore, an effect similar to that in the first embodiment can be obtained.

For example, in a case where the quality of communication between UE #1 and the gNB rapidly deteriorates, it is possible to make a request for changing the path for communication between the device and the NW via another UE. Even in such a case, the gNB can control the path for communication between the device and the NW. In the communication between the device and the NW via a UE, higher reliability and robustness can be obtained.

### Third Modification of First Embodiment.

Another method for solving the problem disclosed in the first embodiment will be disclosed.

In the present modification, a method will be disclosed in which the device makes a request to UE #2 for change of the path for communication between the device and the NW. A part different from the methods disclosed in the first embodiment to the second modification of the first embodiment will be mainly disclosed. Regarding other parts, it is preferable to appropriately apply the methods disclosed in the first embodiment to the second modification of the first embodiment.

The device makes a request to UE #2 for change of the path for communication between the device and the NW. The device may make a request to UE #2 for change of the UE that performs the communication between the device and the NW. The request may include, for example, information indicating that it is for backup of UE #1. For example, results of measurements of communication quality by the device may be included. For example, information indicating that communication with UE #1 is no longer available or information indicating that communication with the NW via UE #1 is no longer available may be included. UE #2 that has received the request for changing the path for communication between the device and the NW can recognize that the device is making the request for changing the path for communication between the device and the NW.

The device preferably measures communication quality with the UE. In a case where the device makes a request to the UE for change of the path for communication between the device and the NW, the device may select a UE with good reception quality. In this example, the UE to be selected is UE #2. By changing the path for communication between the device and the NW to a path via UE #2, communication with better communication quality can be performed.

A method for releasing a deact state of a path between a UE and the gNB will be disclosed. The gNB transmits, to the UE, an uplink physical channel configuration or an uplink signal configuration that can be transmitted in the deact state. The uplink physical channel configuration may be, for example, the PRACH or the PUCCH. The uplink signal configuration may be, for example, an SRS. The gNB preferably transmits the uplink physical channel configuration or the uplink signal configuration that can be transmitted in the deact state before transmitting the deact configuration to the UE or together with the transmission of the deact configuration. After transmitting the deact configuration to the UE, with the use of the uplink physical channel configuration or the uplink signal configuration that can be transmitted in the deact state and has been transmitted to the UE, the gNB waits for the channel or the signal.

The channel or the signal is preferably used as a deact-state release request. For example, an RS indicating a deact-state release request may be provided. The RS may be, for example, an SRS. For example, a PRACH indicating a deact-state release request may be provided. When the gNB receives the channel or the signal, the gNB can recognize that it is the deact-state release request. As another method, the request is preferably included in the channel or the signal. For example, deact-state release request information is preferably included in the channel, for example, the PUCCH. For example, it is preferable to provide an SR indicating a deact-state release request, and to include the SR in the channel, for example, the PUCCH. For example, the deact-state release request information may be included in MSG A in a RACH procedure.

The UE transmits the channel or the signal to the gNB for the deact-state release request. The gNB that has been waiting by using the configuration of the channel or the signal can receive the channel or the signal from the UE. Consequently, the gNB can receive the deact-state release request from the UE.

UE #2 transmits a deact-state release request to the gNB. The gNB that has received the request transmits an act configuration to UE #2. The gNB and UE #2 change a path configuration of the gNB and UE #2 from the deact state to the act state. Thus, it is possible to release the deact state of a path between UE #2 and the gNB and to bring the path into the act state.

UE #2 transmits, to the gNB, a request for changing the path for communication between the device and the NW. The request may include some or all of the information included in the request received from the device. The gNB can determine the change of the path for communication between the device and the NW via UE #1 by receiving, from UE #2, the request for changing the path for communication between the device and the NW. The gNB preferably changes the path to a path for communication between the device and the NW via UE #2. Regarding a method of change, it is preferable to appropriately apply the methods disclosed in the first embodiment to the second modification of the first embodiment.

Regarding a method for transmitting, from UE #2 to the gNB, the request for changing the path for communication between the device and the NW, it is preferable to appropriately apply the method for transmitting the deact-state release request described above. The transmission of the deact-state release request described above from UE #2 to the gNB may be regarded as the request for changing the path for communication between the device and the NW. Thus, signaling can be reduced.

Thus, the device can make a request for changing the path for communication between the device and the NW via UE #2.

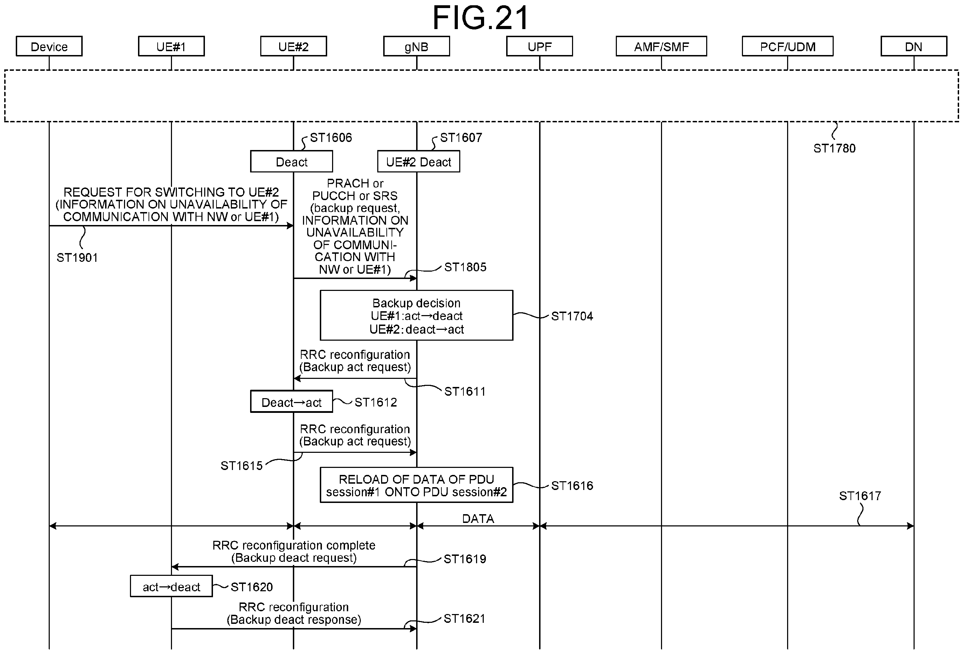

FIG. 21 is a diagram of a sequence illustrating an example of a method for changing a path for communication between the device and the NW in the third modification of the first embodiment. FIG. 21 discloses a method in which the device transmits, via UE #2 to the gNB, a request for changing the path for communication between the device and the NW. In FIG. 21, steps common to those in FIGS. 16, 17, 18, 19, and 20 are denoted by the same step numbers as those therein, and a common description will be omitted.

In step ST1901, the device transmits, to UE #2, a request for changing the path for communication between the device and the NW. The request may be transmitted, for example, in a case where communication between the device and UE #1 is interrupted. In step ST1805, UE #2 transmits, to the gNB, a request for changing the path for communication between the device and the NW. The gNB can recognize that change of the path for communication between the device and the NW has been requested. The gNB can determine the change of the path for communication between the device and the NW and perform the change process.

Although it has been disclosed that the gNB performs the act configuration on UE #2 in the process of steps ST1611 to ST1615, this process may not be performed. Instead thereof, UE #2 may change the configuration of the path for communication with the gNB from "deact" to "act" when receiving, from the device, the request for changing the path for communication between the device and the NW. Communication can be performed with the device at an early stage.

Thus, the device can transmit, via UE #2 to the gNB, the request for changing the path for communication between the device and the NW. The gNB can control the path for communication between the device and the NW. Therefore, an effect similar to that in the first embodiment can be obtained.

For example, in a case where the quality of communication with UE #1 rapidly deteriorates, the device can make a request for changing the path for communication between the device and the NW via another UE. Even in such a case, the gNB can control the path for communication between the device and the NW. In addition, the device can select a UE that performs communication between the device and the NW. The device can select a UE with better communication quality. Therefore, in the communication between the device and the NW via a UE, higher reliability and robustness can be obtained.

### Second Embodiment.

Another method for solving the problem disclosed in the first embodiment will be disclosed.

In the present embodiment, a plurality of UEs are used for communication between a device and an NW. In the plurality of UEs used for communication between the device and the NW, one PDU session is established between one UE and a CN, and communication between another UE and a gNB is split in the PDU session. The split is preferably performed in the gNB. For example, the split may be performed in a GTP-U configured for a PDU session between the gNB and a UPF.

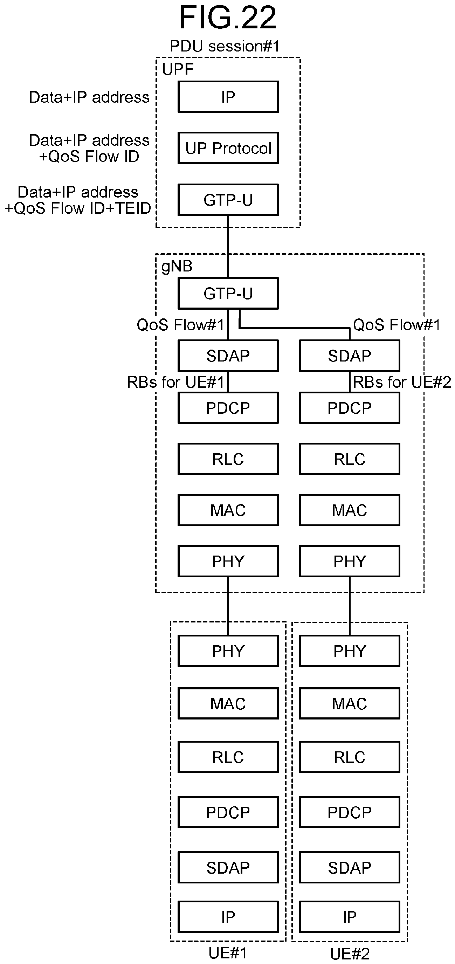

FIG. 22 is a diagram illustrating examples of protocols in a case where one PDU session is established between one UE and a CN in a plurality of UEs used for communication between the device and the NW in the second embodiment. The UPF, the gNB, and the UEs are illustrated. A PDU session (hereinafter sometimes referred to as PDU session #1) is established between UE #1 and the UPF, and communication between UE #2 and the gNB is split in PDU session #1.

SDAP is configured in the gNB and the UEs. The SDAP may be configured for each UE that communicates with the gNB. The SDAP may be configured for each UE in PDU session #1. In the gNB, the SDAP is connected to the GTP-U and identifies, by using the QFI, which QoF of which PDU session the data is from. In the gNB and the UEs, protocols of PDCP, RLC, MAC, and PHY are configured as configurations of radio bearers (RBs) for each UE. The RBs may be configured for each QoS flow. A plurality of RLC bearers may be configured in one RB. Data is transmitted and received between the protocols. Communication is performed between the gNB and the UEs by using the configured RBs.

A method will be disclosed in which in one PDU session established between one UE #1 and the CN, communication between another UE #2 and the gNB is split. UE #1 establishes PDU session #1 with the CN. The PDU session of UE #1 is allocated to UE #2 in the PDU session establishment procedure with the CN. The same QFI as the QFI configured in UE #1 is allocated in PDU session #1 for UE #2. The same TEID of the GTP-U as the TEID of the GTP-U for PDU session #1 configured in UE #1 is allocated for UE #2.

In the gNB, the GTP-U for PDU session #1 is not configured for each UE, and one GTP-U is configured. In the gNB, the SDAP is configured for each UE. In addition, the PDCP to the PHY are also configured for each UE. Thus, in the gNB, the split is performed between the GTP-U and the SDAP, and the protocols from the SDAP to the PHY are configured for each UE.

From the SDAP to the PHY are configured in UE #2. Protocols from the PHY to the SDAP are configured individually for each UE in the same PDU session. Thus, the split is configured in one PDU session between the gNB and each UE.

UE #2 may use the same IP address as that of UE #1. The same IP address may be used between UEs for which the split is performed in the PDU session. For example, an IP address to be used by UE #1 and UE #2 may be provided and used by UE #1 and UE #2. Thus, even if UEs to perform data communication in one PDU session are different from each other, these UEs can perform data communication.

The gNB controls paths between the gNB and the UEs used for communication between the device and the NW.

For downlink, the gNB receives data from the UPF by using the GTP-U configured for PDU session #1. The gNB maps data of the same QFI output from the GTP-U to, depending on which UE the gNB communicates with, the SDAP for the UE which the gNB communicates with. The mapping may be performed in the GTP-U configured in the gNB. The mapping may be performed between the GTP-U and the SDAP configured in the gNB. As another method, a new protocol may be provided for mapping. For example, a new protocol for mapping may be provided between the GTP-U and the SDAP configured in the gNB.

For uplink, the gNB transmits data from the SDAP of any UE to the GTP-U configured for PDU session #1. The gNB transmits data from the GTP-U to the UPF connected for PDU session #1.

Thus, in a plurality of UEs used for communication between the device and the NW, data of a UE not in communication can be mapped to a UE that performs communication. Communication between the device and the NW can be performed by using a path between one UE among the plurality of UEs and the gNB.

In the above-disclosed method, from the SDAP to the PHY are configured in the gNB for each UE, and the split is performed between the GTP-U and the SDAP. In addition, the protocols from the SDAP to the PHY are configured for each UE. As another method, in the gNB, the GTP-U and the SDAP may be configured to be common between the UEs, and from the PDCP to the PHY may be configured for each UE. The split is performed between the SDAP and the PDCP. In addition, the protocols from the SDAP to the PHY are configured for each UE. At that time, the SDAP is preferably configured to be common between the UEs. RBs are preferably configured individually for each UE.

As another method, in the gNB, the GTP-U, the SDAP, and the PDCP may be configured to be common between the UEs, and from the RLC to the PHY may be configured for each UE. The split is performed between the PDCP and the RLC. In addition, the protocols from the SDAP to the PHY are configured for each UE. At that time, the SDAP and the PDCP are preferably configured to be common between the UEs. RLC bearers are preferably configured individually for each UE.

As another method, in the gNB, from the GTP-U to the RLC may be configured to be common between the UEs, and the MAC and the PHY may be configured for each UE. The split is performed between the RLC and the MAC. In addition, the protocols from the SDAP to the PHY are configured for each UE. At that time, from the SDAP to the RLC are preferably configured to be common between the UEs. The MAC and the PHY are preferably configured individually for each UE.

As another method, in the gNB, from the GTP-U to the MAC may be configured to be common between the UEs, and the PHY may be configured for each UE. The split is performed between the MAC and the PHY. In addition, the protocols from the SDAP to the PHY are configured for each UE. At that time, from the SDAP to the MAC are preferably configured to be common between the UEs. The PHY is preferably configured individually for each UE.

Thus, a plurality of UEs can be used for communication between the device and the NW. In addition, change of a path between the gNB and each UE can be performed with a lower protocol, and thus latency during path change can be shortened. In addition, in communication between the device and the NW via a UE, higher reliability and robustness can be obtained.

The gNB may activate/deactivate a path for communication between the gNB and each UE. It is preferable to appropriately apply the methods disclosed in the first embodiment to the third modification of the first embodiment.

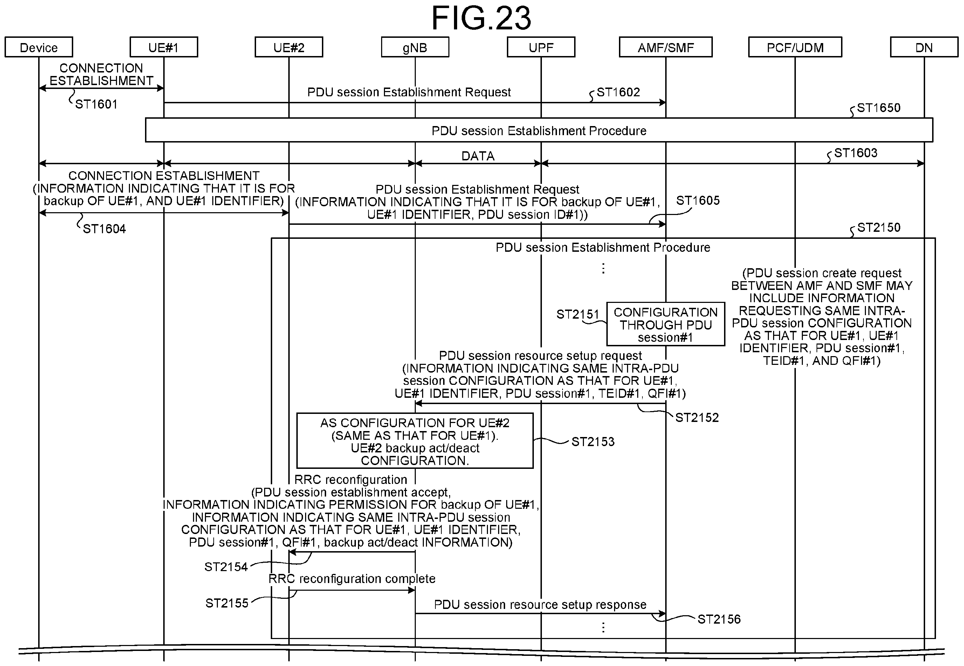

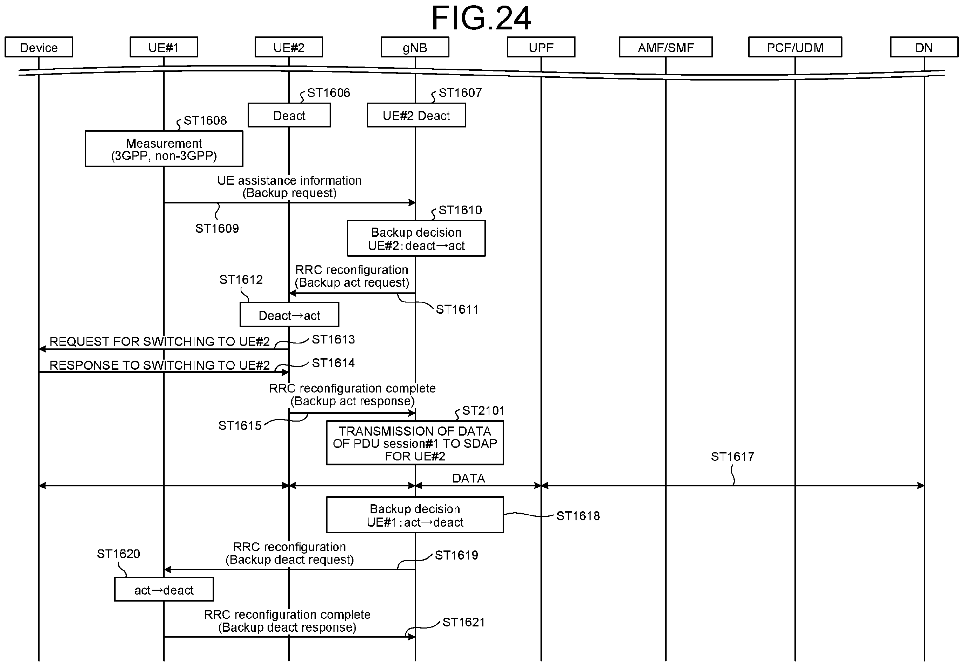

FIGS. 23 and 24 are each a diagram of a sequence illustrating an example of a method for changing a path for communication between the device and the NW in the second embodiment. FIG. 23 illustrates a first half of the sequence, and FIG. 24 illustrates a second half of the sequence. FIGS. 23 and 24 disclose a method in which the device transmits, via UE #2 to the gNB, a request for changing the path for communication between the device and the NW. In detail, a method is disclosed in which the device transmits a request for changing a path for communication using the 5G radio access system via UE #2. In FIGS. 23 and 24, steps common to those in FIGS. 16 to 21 are denoted by the same step numbers as those therein, and a common description will be omitted. In step ST1604, the device transmits, to UE #2, a request for communication using the 5G radio access system. In step ST1605, UE #2 transmits a PDU session establishment request to the AMF.

In step ST2150, a PDU session establishment procedure is performed among UE #2, the gNB, the SMF, the UPF, the PCF, the UDM, and the DN, and PDU session #2 for performing, on UE #2, the same intra-PDU session #1 configuration as that for UE #1 is established. The PDU session establishment request may be included in the PDU session establishment procedure. Consequently, data communication is performed among the device, UE #2, the gNB, the UPF, and the DN. In the PDU session establishment procedure of step ST2150, the following processes are preferably performed.

The AMF that has received the PDU session establishment request in step ST1605 determines to perform a configuration for UE #2 through PDU session #1 in step ST2151. The AMF may determine to perform a configuration of a PDU session for UE #2 in PDU session #1. The AMF may use the information about UE #1 received in step ST1605 for the determination.

The AMF may transmit, to the SMF, a request for the same intra-PDU session #1 configuration as that for UE #1. The request may include information indicating the request for the same intra-PDU session #1 configuration as that for UE #1 and the information about UE #1. A PDU session create request message may be used for the transmission. Thus, the SMF can perform, on UE #2, the same intra-PDU session #1 configuration as that for UE #1. In addition, the SMF may transmit, to the UPF, the request for the same intra-PDU session #1 configuration as that for UE #1.

A PDU session resource setup request transmitted from the AMF/SMF to the gNB in step ST2152 preferably includes information indicating the same intra-PDU session #1 configuration as that for UE #1 and information about UE #1 as a conventional PDU session resource setup request of UE #2. These pieces of information may be transmitted from the SMF to the gNB via the AMF. These pieces of information may be transmitted from the AMF to the gNB. Some of these pieces of information may be transmitted from the SMF to the gNB via the AMF, and the rest of the information may be transmitted from the AMF to the gNB.

Thus, the gNB can recognize that the PDU session to be established in UE #2 is for backup of UE #1, and is performed by the same intra-PDU session #1 configuration as that for UE #1.

In step ST2153, the gNB performs a configuration of an AS for UE #2. At that time, a configuration for backup of UE #1 may be performed. The gNB may perform the same configuration as the configuration performed for UE #1 in PDU session #1.

In step ST2153, the gNB may determine an act/deact process of a path between the gNB and each UE. For example, a path for communication between the gNB and UE #1 is activated, and a path for communication among the gNB, a gNB for backup, and UE #2 is deactivated. Thus, it is possible to reduce power consumption of the gNB and UE #2 that is for backup and not normally used.

In step ST2154, the gNB transmits a PDU session establishment accept to UE #2. An RRC reconfiguration message may be used. The PDU session establishment accept may include information indicating permission for backup of UE #1, the information indicating the same intra-PDU session #1 configuration as that for UE #1, and information about UE #1. The information indicating the same intra-PDU session #1 configuration as that for UE #1 may be information on the AS configuration to be configured for UE #2. The PDU session establishment accept may include an act/deact request for a path for communication between the gNB and UE #2. In this example, the gNB makes a request to UE #2 for a deact configuration. A method for activating/deactivating the path is preferably the method disclosed above.

UE #2 that has received the PDU session establishment accept establishes a PDU session with the CN, and performs an AS configuration with the gNB. In addition, UE #2 performs an act/deact configuration of a path for communication with the gNB. In this example, UE #2 performs a deact configuration. UE #2 that has completed the configuration transmits a configuration complete message to the gNB in step ST2155. An RRC reconfiguration complete message may be used. In step ST2156, the gNB transmits, to the AMF/SMF, PDU session resource setup completion in UE #2.

By employing such a sequence for the PDU session establishment procedure in step ST2150, UE #2 can establish the PDU session in PDU session #1 as a backup UE of UE #1, and in a case where UE #2 is not used normally, data of PDU session #1 can be mapped to a path to UE #1.

Regarding an example of a sequence in which the path for communication between the device and the NW is changed from a path via UE #1 to a path via UE #2, it is preferable to appropriately apply the method disclosed in FIG. 16. The gNB that has received in step ST1615 in FIG. 24 the response indicating that UE #2 has configured the path for communication between the gNB and UE #2 to be "act" preferably performs a process of transmitting the data of PDU session #1 to the SDAP for UE #2 in step ST2101. Thus, the process of path change to the path to UE #2 by the gNB can be performed at an early stage. In addition, by configuring the path for the communication between the gNB and UE #1 to be "deact", power consumption of the gNB and UE #1 can be reduced.

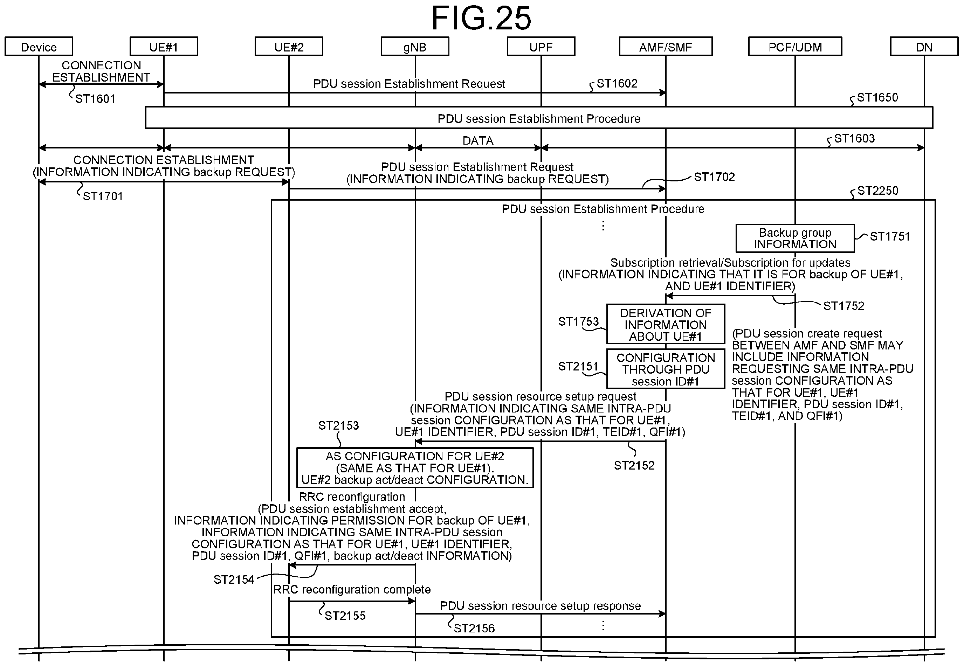

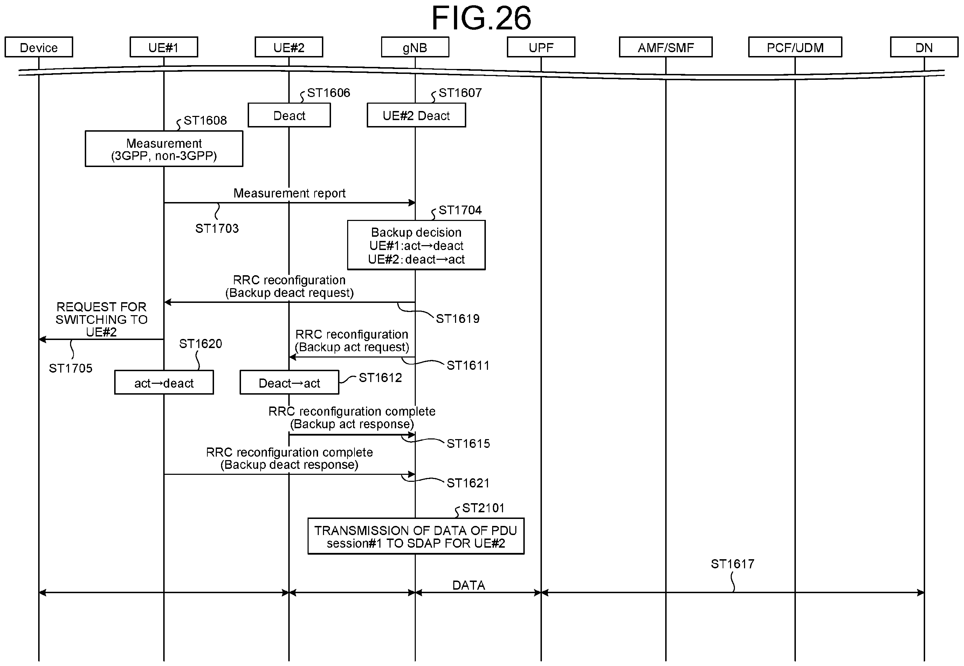

FIGS. 25 and 26 are each a diagram of a sequence illustrating another example of the method for changing the path for communication between the device and the NW in the second embodiment. FIGS. 25 and 26 disclose a method in which the device may not transmit, to UE #2, the identifier of UE #1 or the information about the PDU session established in UE #1. FIG. 25 illustrates a first half of the sequence, and FIG. 26 illustrates a second half of the sequence. In FIGS. 25 and 26, steps common to those in FIGS. 16 to 21, 23, and 24 are denoted by the same step numbers as those therein, and a common description will be omitted.

After the AMF receives the PDU session establishment request in step ST1702, a PDU session establishment procedure is performed among UE #2, the gNB, the SMF, the UPF, the PCF, the UDM, and the DN, and PDU session #2 for performing, on UE #2, the same intra-PDU session #1 configuration as that for UE #1 is established in step ST2250. The PDU session establishment request may be included in the PDU session establishment procedure. Consequently, data communication is performed among the device, UE #2, the gNB, the UPF, and the DN. In the PDU session establishment procedure of step ST2250, the following processes are preferably performed.

In step ST1751, the PCF or the UDM stores information about UE groups. The AMF that has received the PDU session establishment request may transmit, to the SMF, information included in the request. In step ST1752, the AMF/SMF acquires the information about the UE groups from the UDM, and in step ST1753, the AMF/SMF derives a UE belonging to the same group as that UE #2 belongs to by using the information about the UE groups received from the UDM. In addition, a UE in which a PDU session is established may be derived.

The AMF that has derived the UE that belongs to the same group as that UE #2 belongs to and in which the PDU session is established (in this example, UE #2) in step ST1753 determines to perform a configuration for UE #2 through PDU session #1 in step ST2151. The AMF may determine to perform a configuration of a PDU session for UE #2 in PDU session #1. The AMF may use the information about UE #1 received in step ST1605 for the determination. Regarding subsequent processes, it is preferable to appropriately apply a sequence similar to that in step ST2150 disclosed in the example in FIG. 23.

By employing such a sequence for the PDU session establishment procedure in step ST2250, UE #2 can establish the PDU session in PDU session #1 as a backup UE of UE #1, and in a case where UE #2 is not used normally, data of PDU session #1 can be mapped to a path to UE #1. In addition, the gNB can control the change of the UE that performs the communication between the device and the NW with no transmission of the identifier of UE #1 or the information about the PDU session from the UE to the device and from the device to the UE.

Regarding an example of a sequence in which the path for communication between the device and the NW is changed from a path via UE #1 to a path via UE #2, it is preferable to appropriately apply the method disclosed in FIG. 17. The gNB that has received in step ST1615 in FIG. 26 the response indicating that UE #2 has configured a path for communication between the gNB and UE #2 to be "act" preferably performs a process of transmitting the data of PDU session #1 to the SDAP for UE #2 in step ST2101. Thus, the process of path change to the path to UE #2 by the gNB can be performed at an early stage. In addition, by configuring the path for the communication between the gNB and UE #1 to be "deact", power consumption of the gNB and UE #1 can be reduced.

Thus, in one PDU session established between one UE and the CN, communication between another UE and the gNB can be split. By adjusting the number of PDU sessions to be established between the UE and the CN to be one, the path between the UE and the gNB can be changed in the one PDU session. The gNB can control the path for communication between the device and the NW. By the gNB controlling the path change, it is possible to change the path at an earlier stage. Therefore, it is possible to improve reliability and robustness in a case where the device performs communication by using the 5G radio access system via a UE.

In addition, by adjusting the number of PDU sessions to be established between the UE and the CN to be one, complication of communication processes in the UE, the gNB, and the CN can be avoided. It is possible to reduce malfunction by avoiding complication of communication processes, and thus it is possible to further improve reliability and robustness of communication between the device and the NW via a UE.

A plurality of UEs may be used for communication between the device and the NW, and communication may be performed between the device and the NW via not only one UE but also two or more UEs among the plurality of UEs. Communication may be performed between the device and the NW via one or a plurality of UEs, and communication may not be performed between the device and the NW via another one or another plurality of UEs. Communication between the device and the NW may be performed by using a path or paths between the gNB and one or a plurality of UEs among the plurality of UEs for communication between the device and the NW.

One or a plurality of UEs among one or a plurality of UEs that perform communication between the device and the NW may be changed. A path or paths between one or a plurality of UEs and the gNB may be changed to a path or paths between another one or another plurality of UEs and the gNB.

As a method for performing the above processes, it is preferable to appropriately apply the method disclosed above. Since it is possible to flexibly select a UE that performs communication between the device and the NW, communication can be performed by using a more suitable path depending on the radio wave propagation environment and the situation of the UE. It is possible to improve reliability and robustness in the case where the device performs communication by using the 5G radio access system via a UE.

### Third Embodiment.

Another method for solving the problem disclosed in the first embodiment will be disclosed.

In the present embodiment, a plurality of UEs are used for communication between a device and an NW. In the plurality of UEs used for communication between the device and the NW, one PDU session is established between one UE and a CN, and communication between the one UE and a gNB is split by using another UE in the PDU session. The split is preferably performed in the gNB and the one UE. For example, the split may be performed between SDAP and PDCP in the gNB and between SDAP and PDCP in the one UE.

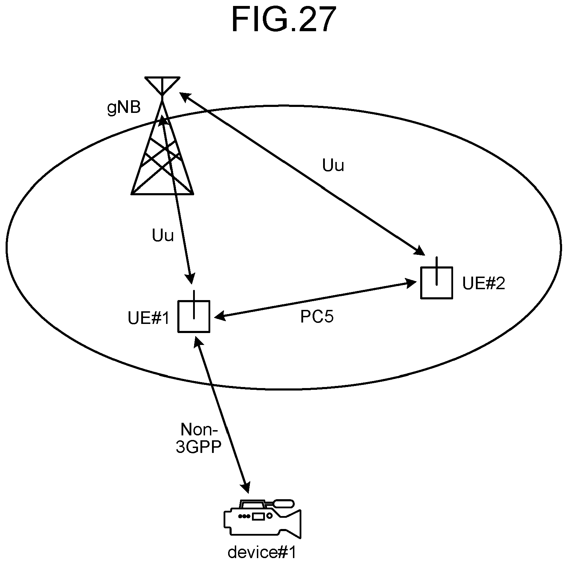

FIG. 27 is a conceptual diagram of a configuration using a plurality of UEs for communication between a device and an NW in the third embodiment. Device #1 performs communication with the NW by using UE #1 and UE #2. Device #1 is connected to UE #1, and UE #1 is connected to the gNB directly, and/or connected to the gNB via UE #2. For communication between device #1 and the NW, PDU session #1 is established between UE #1 and the CN. Communication is split into two paths in UE #1 and the gNB in PDU session #1. One is a path in which direct communication is performed between UE #1 and the gNB, and the other one is a path in which indirect communication is performed between UE #1 and the gNB via UE #2. Communication using a PC5 interface may be performed between UE #1 and UE #2.

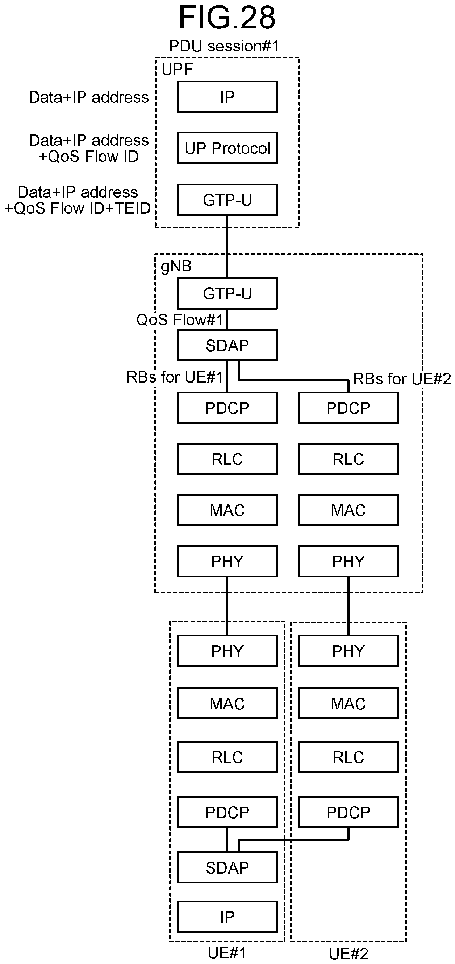

FIG. 28 is a diagram illustrating examples of protocols in a case where communication between one UE and a gNB is split by using another UE in one PDU session in a plurality of UEs used for communication between the device and the NW in the third embodiment. The UPF, the gNB, and the UEs are illustrated. A PDU session (hereinafter sometimes referred to as PDU session #1) is established between UE #1 and the UPF, and communication between UE #2 and the gNB is split in PDU session #1.

SDAP is configured in the gNB and the UEs. In the gNB, the SDAP is connected to the GTP-U and identifies, by using the QFI, which QoF of which PDU session the data is from. In the SDAP, a split is performed into a path in which direct communication is performed between UE #1 and the gNB, and the other one, i.e., a path in which indirect communication is performed between UE #1 and the gNB via UE #2. In the gNB and the UEs, protocols of PDCP, RLC, MAC, and PHY are configured as configurations of radio bearers (RBs) for each UE. The RBs may be configured for each QoS flow. A plurality of RLC bearers may be configured in one RB. Data is transmitted and received between the protocols. Communication is performed between the gNB and the UEs by using the configured RBs.

A method will be disclosed in which in one PDU session established between one UE #1 and the CN, communication between UE #1 and the gNB is split by using another UE #2. UE #1 establishes PDU session #1 with the CN. The gNB performs configurations of radio bearers (RBs) for UE #2. For example, configurations of the PDCP to the PHY may be performed as the configurations of the RBs. Consequently, communication between UE #1 and the gNB is split by using UE #2.

Direct communication is established between UE #1 and UE #2. PC5 which is an interface between UEs may be used. A PC5 unicast link is established by UE #1 and UE #2. An SL RRC connection may be established by UE #1 and UE #2. An SL RRC reconfiguration process may be performed by UE #1 and UE #2. Regarding a method for establishing direct communication between UEs, it is preferable to appropriately apply the method disclosed in the second modification of the first embodiment. Thus, direct communication can be performed between UE #1 and UE #2.

In one PDU session established between UE #1 and the CN, a path for direct communication between UE #1 and the gNB and a path for indirect communication between UE #1 and the gNB via UE #2 are configured. When the path for indirect communication between UE #1 and the gNB via UE #2 is configured, the inter-UE direct communication disclosed in the second modification of the first embodiment is preferably used for communication between UE #1 and UE #2. Thus, in one PDU session established between one UE #1 and the CN, communication between UE #1 and the gNB can be split by using another UE #2.

The gNB and UE #1 control paths between the gNB and the UE #1 used for communication between the device and the NW.

The gNB changes a path via the RB configuration of UE #1 for a path via the RB configuration of UE #2 in the SDAP, for example. UE #1 changes the path via the RB configuration of UE #1 for the path via the RB configuration of UE #2 in the SDAP, for example. In the gNB and UE #1, data mapping is preferably performed in the SDAP, for example. In downlink communication, the gNB transmits output data from the SDAP to the PDCP for any UE depending on which path is used. In uplink communication, UE #1 determines whether to transmit output data from the SDAP to the PDCP of UE #1 or to UE #2 depending on which path is used. UE #2 that has received the data from UE #1 transmits the data to the PDCP.

It has been disclosed that the gNB and UE #1 perform mapping of communication data in the SDAP. The mapping may be performed between the SDAP and the PDCP. As another method, the mapping may be performed in the PDCP. The mapping may be performed between the PDCP and the RLC. As another method, the mapping may be performed in the RLC. The mapping may be performed between the RLC and the MAC. As another method, the mapping may be performed in the MAC. The mapping may be performed between the MAC and the PHY. As another method, the mapping may be performed within the PHY. As another method, a new protocol may be provided for mapping.

Where mapping is performed may be statically determined in a standard or the like. As another method, where mapping is performed may be configurable. For example, the gNB may determine where mapping is performed and notify the UE thereof. It is possible to perform flexible configuration depending on QoS required for each service or the radio wave propagation environment.

The gNB may determine which path is used for communication. The gNB may transmit, to UE #1, information about a path used for communication.

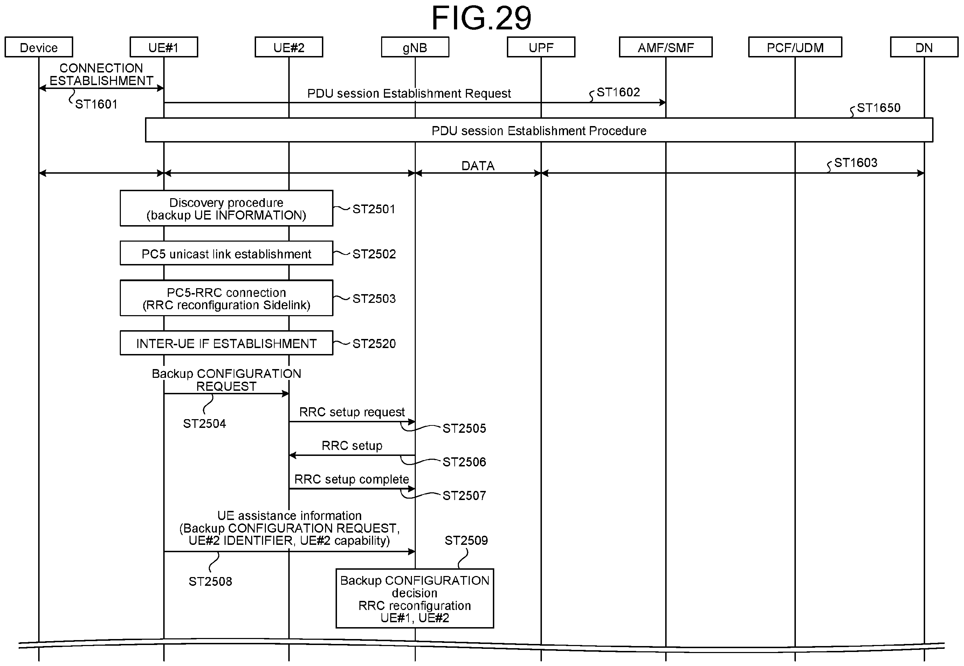

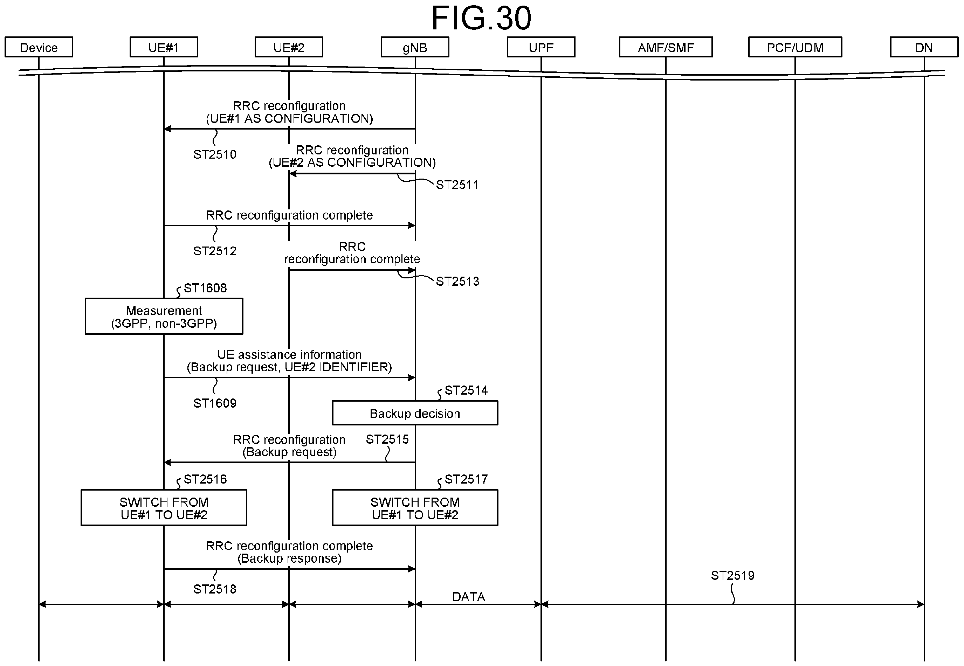

FIGS. 29 and 30 are each a diagram of a sequence illustrating an example of a method for changing a path for communication between the device and the NW in the third embodiment. FIG. 29 illustrates a first half of the sequence, and FIG. 30 illustrates a second half of the sequence. In FIGS. 29 and 30, steps common to those in FIG. 16 are denoted by the same step numbers as those therein, and a common description will be omitted.

In step ST2501, UE #1 and UE #2 perform a discovery procedure. Regarding a method of the discovery procedure, it is preferable to appropriately apply the method disclosed in the second modification of the first embodiment. In step ST2502, a PC5 unicast link is established between UE #1 and UE #2. In step ST2503, a PC5 RRC connection is established between UE #2 and UE #1. SL RRC reconfiguration may be transmitted. For example, an RRC reconfiguration sidelink message may be used. Thus, direct communication can be performed between UE #1 and UE #2 on PC5.

In step ST2520, an interface for data transmission/reception or signaling transmission/reception may be established between UE #1 and UE #2. The interface may be performed by using SL.

In step ST2504, UE #1 transmits, to UE #2, a request for establishing RRC connection with the gNB. The RRC connection establishment request may include information indicating that it is for backup. In steps ST2505 to ST2507, UE #2 establishes the RRC connection with the gNB. Consequently, communication between UE #2 and the gNB can be performed.

In step ST2508, UE #1 makes a request for configuring, in one PDU session established between UE #1 and the CN, a configuration in which split into the path via UE #2 is performed. In the request, it is requested to configure a path for direct communication between UE #1 and the gNB and a path for communication between UE #1 and the gNB via UE #2. The request may include information indicating a path for backup. An identifier of UE #2 may be included as the information. In addition, capability of UE #2 may be included. The capability of UE #2 may be acquired from UE #2 in advance. The acquisition may be performed by using PC5. Thus, the gNB can recognize the request.

In step ST2509, the gNB configures, for UE #1 and UE #2, the path for direct communication between UE #1 and the gNB and the path for communication between UE #1 and the gNB via UE #2. An AS configuration for UE #1 and an AS configuration for UE #2 are performed. In step ST2510, the gNB transmits, to UE #1, the AS configuration of UE #1 in a case of employing a split configuration. In step ST2511, the gNB transmits, to UE #2, the AS configuration of UE #2 in a case of employing a split configuration. UE #1 and UE #2 that have performed the configurations transmit completion of the configurations to the gNB in steps ST2512 and ST2513, respectively.

A method for changing a path will be disclosed. In a case where UE #1 that has measured the communication quality in step ST1608 determines that it is necessary to change the path, UE #1 transmits, to the gNB, a request for changing the path for communication between the device and the NW in step ST1609.

The gNB that has received the request determines to change the path in step ST2514. The gNB determines to perform a path change from the path for direct communication with UE #1 to the path for indirect communication with UE #1 via UE #2 for backup. In step ST2515, the gNB requests UE #1 to change the path for communication between the device and the NW from the path for direct communication to the path for indirect communication from the gNB via UE #2. In step ST2516, UE #1 that has received the request changes the path for communication between the device and the NW from the path for direct communication with the gNB to the path for communication with the gNB via UE #2. In step ST2517, the gNB changes the path for communication between the device and the NW from the path for direct communication with UE #1 to the path for communication with UE #1 via UE #2. Thus, the path is changed between the gNB and each of UE #1 and UE #2.

Consequently, in step ST2519, data communication can be performed among the device, UE #1, UE #2, the gNB, the UPF, and the DN.

Another method for changing a path will be disclosed. In a case where UE #1 determines that it is necessary to change the path, UE #1 may transmit, to UE #2, a request for changing the path for communication between the device and the NW. UE #2 that has received the path change request transmits the path change request to the gNB. Thus, for example, even in a case where the path change request cannot be delivered from UE #1 to the gNB due to rapid deterioration of the communication quality between the gNB and UE #1, UE #1 can transmit the path change request to the gNB via UE #2. The path can be changed between the gNB and each of UE #1 and UE #2.

The UE groups disclosed in the first modification of the first embodiment may be configured. The gNB may transmit the information about the UE groups to UE #1. The gNB may transmit information about UEs belonging to a UE group to UE #1. For example, in the process of step ST1650, the gNB may transmit the information about the UE groups to UE #1. For example, by performing, in the process of step ST1650, steps ST1751, ST1752, and ST1661 disclosed in the first modification of the first embodiment, the gNB may acquire the information about the UE groups. The gNB preferably transmits the information about the UE groups to UE #1. UE #1 can recognize UEs belonging to the UE group. UE #1 can detect a UE belonging to the UE group in the discovery procedure. UE #1 can directly communicate with the UE belonging to the UE group. A path for indirect communication between UE #1 and the gNB via the UE belonging to the UE group can be configured.

Thus, in one PDU session established between one UE and the CN, communication between the one UE and the gNB can be split by using another UE. The gNB and the one UE can control the path for communication between the device and the NW. By the gNB controlling the path change, it is possible to change the path at an earlier stage. Therefore, it is possible to improve reliability and robustness in a case where the device performs communication by using the 5G radio access system via a UE.

In addition, the necessity of the PDU session establishment procedure between the another UE and the CN is eliminated. Therefore, it is possible to avoid complication of communication processes in the UEs, the gNB, and the CN. It is possible to reduce malfunction by avoiding complication of the communication processes. In addition, the amount of signaling among the UEs, the gNB, and the CN can be reduced. Reliability and robustness in the communication between the device and the NW via a UE can be further improved.

A statement of "gNB or cell" in the present disclosure means that it may either be a gNB or a cell unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam.

## Claims

1. A communication system comprising:
a base station adaptive to a fifth generation radio access system;
a plurality of communication terminals connected to the base station; and
a device connected to the communication terminals, wherein
a first communication terminal and a second communication terminal among the plurality of communication terminals are connected to a same base station, and
in a state in which the device is communicating with a core network via the first communication terminal and the base station, a session for the device to perform communication is established between the second communication terminal and the core network.

2. The communication system according to claim 1, wherein
in a case where deterioration of communication quality between the first communication terminal and the device or deterioration of communication quality between the base station and the first communication terminal is detected, the base station to which the first communication terminal and the second communication terminal are connected switches a path for communication between the device and the core network to a path via the second communication terminal.

3. The communication system according to claim 2, wherein
a link for direct communication between the first communication terminal and the second communication terminal is established, and
in a case where deterioration of communication quality between the first communication terminal and the device or deterioration of communication quality between the base station and the first communication terminal is detected, the first communication terminal transmits, to the base station via the second communication terminal, a request for switching a path for communication between the device and the core network.

4. The communication system according to claim 2, wherein
in a case where deterioration of communication quality between the first communication terminal and the device is detected, the device transmits, to the base station via the second communication terminal, a request for switching a path for communication between the device and the core network.

5. The communication system according to any one of claims 1 to 4, wherein
among the plurality of communication terminals, communication terminals connected to a same base station and to which a same device is connected are grouped under a predetermined condition, and
the first communication terminal and the second communication terminal are communication terminals belonging to a same group.

6. The communication system according to any one of claims 1 to 5, wherein
a session for the device to perform communication with the core network includes a session established between the first communication terminal and the core network via the base station, and a session established between the base station to which the first communication terminal and the second communication terminal are connected and the second communication terminal.

7. The communication system according to any one of claims 1 to 5, wherein
a link for direct communication between the first communication terminal and the second communication terminal is established, and
a session for the device to perform communication with the core network includes a session established between the first communication terminal and the core network via the base station, and a session established between the base station to which the first communication terminal and the second communication terminal are connected and the first communication terminal via the second communication terminal and the link.
